# EUROPEAN PATENT APPLICATION

(11) **EP 4 815 086 A1**
(43) Date of publication of application: **30.09.2026**
(21) Application number: 24895473.7
(22) Date of filing: 24.05.2024
(51) Int. Cl.: H01M 10/0525, H01M 4/587, H01M 4/36

(54) **SECONDARY BATTERY AND ELECTRIC DEVICE**

(30) Priority: 30.11.2023 CN 202311643139
(71) Applicant: Contemporary Amperex Technology Co., Limited, Ningde, Fujian 352100 (CN)
(72) Inventor: WU, Kai, Ningde, Fujian 352100 (CN); LIN, Xieji, Ningde, Fujian 352100 (CN); LI, Yuanyuan, Ningde, Fujian 352100 (CN); SHEN, Rui, Ningde, Fujian 352100 (CN); HE, Libing, Ningde, Fujian 352100 (CN)
(74) Representative: Gong, Jinping
(86) International application number: PCT/CN2024/095219
(87) International publication number: WO 2025/112363

(57) **Abstract**

Provided are secondary battery and an electric device. The secondary battery includes a negative electrode plate. The negative electrode plate includes a negative electrode current collector and a negative electrode film layer on at least one surface of the negative electrode current collector. The negative electrode film layer includes a negative electrode active material. The negative electrode active material includes a first carbon-based material and a second carbon-based material, and both the first carbon-based material and the second carbon-based material are provided with pore structures. The I_{D}/I_{G} of the first carbon-based material is less than or equal to 0.27, and the I_{D}/I_{G} of the second carbon-based material is greater than or equal to 0.38, where the I_{D} denotes the D peak intensity at 1350 ± 50 cm⁻¹ in a Raman spectrum, and the I_{G} denotes the G peak intensity at 1580 ± 50 cm⁻¹ in a Raman spectrum.

## Description

### CROSS-REFERENCE TO RELATED APPLICATION

The present disclosure is presented based on Chinese Patent Application No. 202311643139.3, filed on November 30, 2023 and entitled "SECONDARY BATTERY AND ELECTRIC DEVICE", and claims priority to the Chinese Patent Application, the content of which is incorporated herein by reference in its entirety.

### TECHNICAL FIELD

The present disclosure relates to the technical field of batteries, and in particular, to a secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace. Currently, as the application range of secondary batteries becomes increasingly widespread, the performance of secondary batteries faces great challenges. For example, secondary batteries may require good kinetics performance and good storage life, especially in use in a broad range of temperatures.

### SUMMARY

The present disclosure is made in view of the above problems, and is intended to provide a secondary battery and an electric device. The secondary battery has both improved low-temperature kinetics performance and a high-temperature storage life.

A first aspect of the present disclosure provides a secondary battery. The secondary battery includes a negative electrode plate, where the negative electrode plate includes a negative electrode current collector and a negative electrode film layer on at least one surface of the negative electrode current collector; the negative electrode film layer includes a negative electrode active material; the negative electrode active material includes a first carbon-based material and a second carbon-based material, and both the first carbon-based material and the second carbon-based material are provided with pore structures; the I_{D}/I_{G} of the first carbon-based material is ≤ 0.27, and the I_{D}/I_{G} of the second carbon-based material is ≥ 0.38, where the I_{D} denotes the D peak intensity at 1350 ± 50 cm⁻¹ in a Raman spectrum, and the I_{G} denotes the G peak intensity at 1580 ± 50 cm⁻¹ in a Raman spectrum.

As such, the present disclosure acquires a mixed negative electrode active material by combining the first carbon-based material and the second carbon-based material, both being provided with pore structures but different I_{D}/I_{G} values. Both the first carbon-based material and the second carbon-based material are provided with pore structures that provide a transmission channel for the active ions to accelerate the reaction between the active ions and the negative electrode active material, thereby improving the kinetics performance of the secondary battery. On this basis, the I_{D}/I_{G} of the first carbon-based material is ≤ 0.27, suggesting a high degree of order and fewer defects of carbon on the surface of the material, and thus fewer side reactions with the electrolytic solution, which is beneficial to the high-temperature storage performance of the secondary battery. The second carbon-based material has an I_{D}/I_{G} of ≥ 0.38 and high reactivity, thereby further providing good low-temperature kinetics performance. The combination of the two as the negative electrode active material can give full play to the advantages of the two, thus providing secondary batteries with both good low-temperature kinetics performance and high-temperature storage performance.

In some embodiments, the I_{D}/I_{G} of the first carbon-based material is 0.13 to 0.25; and/or, the I_{D}/I_{G} of the second carbon-based material is 0.40 to 0.60. When the I_{D}/I_{G} of the first carbon-based material falls within the above range, the material may have a low degree of amorphousness of carbon and fewer side reactions at a high temperature, which is beneficial to the high-temperature storage performance of the secondary battery. When the I_{D}/I_{G} of the second carbon-based material falls within the above range, the second carbon-based material may have appropriate reactivity, thereby improving the low-temperature kinetics performance of the secondary battery.

In some embodiments, the T_{3R(101)}/I_{2H(004)} in the XRD diffraction pattern of the first carbon-based material is less than the I_{3R(101)}/I_{2H(004)} in the XRD diffraction pattern of the second carbon-based. Optionally, the I_{3R(101)}/I_{2H(004)} in the XRD diffraction pattern of the first carbon-based material is less than or equal to 0.06, further optionally 0 to 0.06. Optionally, the I_{3R}/I_{2H} of the second carbon-based material is ≥ 0.2, further optionally 0.22 to 0.4. The I_{3R(101)} is the diffraction peak intensity of the 101 crystal plane of the 3R phase of graphite corresponding to 43° to 44° in an XRD diffraction pattern, and the I_{2H(004)} is the diffraction peak intensity of the 004 crystal plane of the 2H phase of graphite corresponding to 53° to 55° in an XRD diffraction pattern.

In some embodiments, the volume distribution particle size Dv50 of the first carbon-based material is greater than the volume distribution particle size Dv50 of the second carbon-based material. The adjustment of the volume distribution particle sizes of the first carbon-based material and the second carbon-based material, especially the second carbon-based material that has a relatively small volume distribution particle size, is beneficial to increasing the specific surface area of the material and thereby further improving the kinetics performance of the secondary battery.

In some embodiments, the volume distribution particle size Dv50 of the first carbon-based material is ≥ 15 µm, optionally 16 µm ≤ Dv50 ≤ 20 µm; and/or, the Dv50 of the second carbon-based material is ≤ 13 µm, optionally 7 µm ≤ Dv50 ≤ 12 µm. When the volume distribution particle size Dv50 of the first carbon-based material falls within the above range, the consumption of active ions can be reduced, and the high-temperature storage performance of the secondary battery can be improved. A small volume distribution particle size Dv50 of the second carbon-based material within the above range is helpful in improving the contact between the materials, reducing the transmission distance of active ions, and further improving the kinetics performance of the secondary battery at a low temperature.

In some embodiments, the BET specific surface area of the first carbon-based material is less than the BET specific surface area of the second carbon-based material. The adjustment of the specific surface area of the material provides the first carbon-based material a smaller specific surface area and reduces the side reactions with the electrolytic solution, which is beneficial to improving the high-temperature storage performance of the secondary battery. Meanwhile, the larger specific surface area of the second carbon-based material can provide a greater reaction surface, which is beneficial to the reaction of active ions and improves the kinetics performance of the secondary battery.

In some embodiments, the specific surface area of the first carbon-based material is less than or equal to 2.1 m²/g, optionally 1.3 m²/g to 1.9 m²/g; and/or, the BET specific surface area of the second carbon-based material is ≤ 3.6 m²/g, optionally 1.8 m²/g to 3.4 m²/g. A specific surface area of the first carbon-based material within the above range is beneficial to the high-temperature storage performance and cycle performance of the secondary battery. A specific surface area of the second carbon-based material within the above range can provide better low-temperature kinetics performance.

In some embodiments, the degree of graphitization of the first carbon-based material is greater than the degree of graphitization of the second carbon-based material.

In some embodiments, the degree of graphitization of the first carbon-based material is ≥ 95%, optionally 96.0% to 98.5%; the degree of graphitization of the second carbon-based material is ≥ 95%, optionally 95.0% to 97.5%.

The high degrees of graphitization of the first and second carbon-based materials can increase the specific capacity of the negative electrode active material and are beneficial to improving the electron transmission performance of the negative electrode film layer, thereby combining a high energy density with good kinetics performance in the secondary battery. In addition, a high degree of graphitization on the surface of the material is beneficial to the high-temperature storage performance of the secondary battery.

In some embodiments, the first carbon-based material includes an external region and an internal region located inside the external region, where the external region refers to a region extending from the surface of a particle of the first carbon-based material to the interior of the particle by a distance of 2.5 µm; in a cross-sectional view of the first carbon-based material, with the total pore area of the external region being denoted as S1 and the total pore area of the internal region being denoted as S2, S2 > S1.

When the total pore area S1 of the external region of the first carbon-based material is less than the total pore area S2 of the internal region, it indicates that the structure of the external region of the carbon material is denser than that of the internal region. Such a structure is more beneficial to improving the stability of the material and reducing the expansion during the charging and discharging cycle, thereby improving the cycle life of the secondary battery. In addition, a smaller pore area in the external region is also conducive to reducing side reactions and the consumption of active ions, which is beneficial to improving the high-temperature storage performance of the secondary battery.

Optionally, the first carbon-based material satisfies 2.5 ≤ S2/S1 ≤ 460. The external region of the first carbon-based material has fewer pore structures, which is beneficial to reducing the side reactions between the first carbon-based material and the electrolytic solution and reducing the consumption of active ions, thereby improving the storage performance of the secondary battery. In addition, the expansion of the first carbon-based material in the charging and discharging cycle can be suppressed, thereby improving the cycle life of the secondary battery.

In some embodiments, the area of a single pore structure in the external region of the first carbon-based material is less than or equal to 0.15 µm², optionally less than or equal to 0.13 µm²; and/or, the internal region of the first carbon-based material includes one or more pore structures having a pore area of greater than or equal to 0.15 µm², and optionally includes one or more pore structures having a pore area of 0.15 µm² to 2.0 µm². The external region in particles of a first carbon-based material having the above structure is relatively dense, while the internal region has certain pore structures. In this way, on the one hand, sufficient and stable expansion space can be reserved for the volume change of the particles of the first carbon-based material, thereby reducing the risk of crushing the particles of the first carbon-based material, reducing the entry of the electrolytic solution into the particles and thus the occurrence of side reactions, reducing the consumption of active ions, and thereby further improving the storage performance of the secondary battery. On the other hand, the compaction density of the negative electrode film layer can also be improved.

In some embodiments, at least part of the surface of the second carbon-based material is provided with a carbon coating layer. Further coating at least part of the surface of the second carbon-based material with the carbon coating layer can further improve the transmission of active ions at a low temperature, which is beneficial to improving the low-temperature kinetics performance of the secondary battery.

In some embodiments, the first carbon-based material satisfies at least one of the following.
(1) The powder compaction density of the first carbon-based material at 50,000 N is ≤ 2.10 g/cm³, optionally 1.85g/cm³ to 2.00 g/cm³. A powder compaction density of the first carbon-based material within the above range can improve the compaction density of the negative electrode film layer and the energy density of the secondary battery, and is beneficial to forming proper pore passage structures between the particles of the negative electrode film layer and improving the transmission performance for active ions and electrons, thereby improving the kinetics performance of the secondary battery.
(2) The volume distribution particle size Dv90 of the first carbon-based material is less than or equal to 40 µm, optionally 30 µm to 38 µm. A volume distribution particle size Dv90 of the particles of the first carbon-based material within the above range is beneficial to reducing the specific surface area of the first carbon-based material, reducing side reactions, and improving the storage performance of the secondary battery.
(3) The particle size distribution [(Dv90)-(Dv10)]/(Dv50)] of the first carbon-based material is ≤ 1.55, optionally 0.90 to 1.50. A particle size distribution of the first carbon-based material within the foregoing range may result in good particle packing efficiency of the first carbon-based material, thereby helping improve the compaction density of the negative electrode film layer and increase the energy density of the secondary battery. In addition, it is beneficial to forming proper pore passage structures between the particles of the negative electrode film layer, and improving the transmission performance for active ions and electrons and the kinetics performance of the secondary battery.
(4) The specific capacity of the first carbon-based material is ≥ 362 mAh/g, optionally 365 mAh/g to 372 mAh/g. A specific capacity of the first carbon-based material within the above range can provide the secondary battery improved energy density.
(5) The first carbon-based material includes a primary particle, and optionally, the number proportion of the primary particle in the first carbon-based material is greater than or equal to 80%.

When the first carbon-based material satisfies any one of the above items, one or more of the low-temperature kinetics performance, high-temperature storage performance, energy density, and the like of the secondary battery can be further improved.

In some embodiments, the second carbon-based material satisfies at least one of the following.
(1) The specific capacity of the second carbon-based material is ≥ 358 mAh/g, optionally 360 mAh/g to 367 mAh/g. A specific capacity of the second carbon-based material within the above range can provide the secondary battery improved energy density.
(2) The compaction density of the second carbon-based material at 50,000 N is ≤ 1.95 g/cm³, optionally 1.75g/cm³ to 1.90 g/cm³. A powder compaction density of the second carbon-based material within the above range is beneficial to forming proper pore passage structures between the particles of the negative electrode film layer and improving the transmission performance for active ions and electrons, thereby improving the kinetics performance of the secondary battery.
(3) The second carbon-based material includes a primary particle, and optionally, the number proportion of the primary particle in the second carbon-based material is greater than or equal to 80%.
(4) The second carbon-based material is natural graphite.

When the second carbon-based material satisfies any one of the above items, the low-temperature kinetics performance, energy density, and the like of the secondary battery can be further improved.

In some embodiments, the mass proportion of the first carbon-based material in the negative electrode active material is greater than that of the second carbon-based material in the negative electrode active material. Optionally, the mass proportion of the first carbon-based material in the negative electrode active material is ≥ 55wt%, optionally 60wt% to 80wt%. A mass proportion of the first carbon-based material in the negative electrode active material within the above range can give play to advantages of the first carbon-based material and the second carbon-based material, so as to acquire improved high-temperature storage performance and low-temperature kinetics performance.

In some embodiments, the negative electrode active material satisfies at least one of the following.
(1) The volume distribution particle size Dv50 of the negative electrode active material is ≤ 17.0 µm, optionally 12 µm to 16.5 µm.
(2) The volume distribution particle size Dv90 of the negative electrode active material is ≤ 35 µm, optionally 25 µm to 33 µm.
(3) The volume particle size distribution of the negative electrode active material satisfies: (Dv90-Dv10)/Dv50 ≤ 1.50, optionally 1.0 to 1.45.
(4) The specific surface area of the negative electrode active material is ≤ 3.0 m²/g, optionally 1.5 m²/g to 2.8 m²/g.

In some embodiments, the negative electrode film layer satisfies at least one of the following.
(1) The compaction density of the negative electrode film layer is ≥ 1.55g/cm ³, optionally 1.6 g/cm³ to 1.7 g/cm³.
(2) The areal density of the negative electrode film layer is ≥ 10.0mg/cm², optionally 11.0 mg/cm² to 15.5 mg/cm².
(3) The porosity of the negative electrode film layer is 16% to 30%, optionally 19% to 27%. Therefore, this is beneficial to combining a high capacity with proper pore passage structures in the negative electrode film layer, thereby facilitating achieving a high energy density and favorable storage performance and kinetics performance of the secondary battery.
(4) The thickness of the negative electrode film layer is ≥ 70 µm, optionally 90 µm to 130 µm.

The provision of at least one of the above features for the negative electrode film layer is beneficial to at least one of the high-temperature storage performance, low-temperature kinetics performance, energy density, and the like of the secondary battery.

A second aspect of the present disclosure further provides an electric device including the secondary battery according to the first aspect of the present disclosure.

The electric device of the present disclosure includes the secondary battery according to the present disclosure and thus has at least the same advantages as the secondary battery.

### BRIEF DESCRIPTION OF THE DRAWINGS

FIG. 1 is a scanning electron microscope image of a longitudinal section of a negative electrode plate prepared according to Example 1.
FIG. 2 is a schematic view of a cross-sectional image of a particle of a first carbon-based material according to the present disclosure.
FIG. 3 is a schematic view of a battery cell according to one embodiment of the present disclosure.
FIG. 4 is an exploded view of the battery cell according to one embodiment of the present disclosure shown in FIG. 3.
FIG. 5 is a schematic view of a battery module according to one embodiment of the present disclosure.
FIG. 6 is a schematic view of a battery pack according to one embodiment of the present disclosure.
FIG. 7 is an exploded view of the battery pack according to one embodiment of the present disclosure shown in FIG. 6.
FIG. 8 is a schematic view of an electric device using the secondary battery according to one embodiment of the present disclosure as the power source.

### Description of the reference numerals:

1: battery pack; 2: upper case body; 3: lower case body; 4: battery module; 5: battery cell; 51: housing; 52: electrode assembly; 53: top cover assembly.

### DETAILED DESCRIPTION

Hereinafter, the embodiments of the secondary battery and the electric device of the present disclosure are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present disclosure and are not intended to limit the subject matter recited in the claims.

The "ranges" disclosed in the present disclosure are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present disclosure, unless otherwise specified, the numerical range "a to b" indicates an abbreviated representation of any combination of real numbers between a and b, where both a and b are real numbers. For example, the numerical range "0 to 5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with one another to form new technical solutions.

Unless otherwise specified, all technical features and optional technical features of the present disclosure may be combined with one another to form new technical solutions.

Unless otherwise specified, all steps of the present disclosure can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Unless otherwise specified, the terms used in the present disclosure have well-known meanings that are commonly understood by those skilled in the art.

Unless otherwise specified, the values of the parameters mentioned in the present disclosure can be measured by various test methods commonly used in the art. For example, they can be measured according to the test methods given in the present disclosure.

Unless otherwise specified, in the present disclosure, the term "active ion" refers to an ion that can be intercalated and deintercalated back and forth between the positive and negative electrodes of the secondary battery, including but not limited to, lithium ion, and the like.

With the wide application of secondary batteries, higher requirements are put forward for the performance of secondary batteries under different use environments, such as high temperature and low temperature. The kinetics performance of secondary batteries at low temperatures and the storage performance at high temperatures still need to be improved. The kinetics performance, especially the kinetics performance at a low temperature, generally requires a negative electrode active material with higher reactivity and a shorter transmission path of active ions, which, however, may easily lead to side reactions between the negative electrode active material and the electrolyte and thereby reduced storage performance of the negative electrode active material, particularly, affected storage performance at a high temperature.

Therefore, currently, it is generally difficult to combine high-temperature storage performance with low-temperature kinetics performance in secondary batteries.

In view of this, a first aspect of the embodiments of the present disclosure provides a secondary battery.

The term "secondary battery" described herein refers to a battery cell, a battery module, or a battery pack.

Typically, the secondary battery cell includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting while allowing the passage of ions.

### [Negative Electrode Plate]

The secondary battery of the present disclosure includes a negative electrode plate. The negative electrode plate includes a negative electrode current collector and a negative electrode film layer on at least one surface of the negative electrode current collector, and the negative electrode film layer includes a negative electrode active material. The negative electrode active material includes a first carbon-based material and a second carbon-based material. Both the first carbon-based material and the second carbon-based material are provided with pore structures; the I_{D}/I_{G} of the first carbon-based material is ≤ 0.27, and the I_{D}/I_{G} of the second carbon-based material is ≥ 0.38, wherein the I_{D} denotes the D peak intensity at 1350 ± 50 cm⁻¹ in a Raman spectrum, and the I_{G} denotes the G peak intensity at 1580 ± 50 cm⁻¹ in a Raman spectrum.

The I_{D}/I_{G} of the first carbon-based material is ≤ 0.27, suggesting a high degree of order and fewer defects of carbon in a surface region of the material, and thus fewer side reactions with the electrolytic solution, which can improve the high-temperature storage performance of the secondary battery. The second carbon-based material is provided with pore structures and has an I_{D}/I_{G} of ≥ 0.38, suggesting a low degree of order of carbon in a surface region of the material and high reactivity, which is beneficial to rapid reaction and the transmission of active ions, thereby providing the secondary battery good low-temperature kinetics performance. The combination of a first carbon-based material and a second carbon-based material having the above performance, as the negative electrode active material, gives play to the advantages of the first carbon-based material and the second carbon-based material, and enables the combination of good low-temperature kinetics performance with good high-temperature storage performance in the secondary battery.

In some embodiments, the I_{D}/I_{G} of the first carbon-based material is 0.13 to 0.25. Illustratively, the I_{D}/I_{G} of the first carbon-based material may be 0.13, 0.14, 0.15, 0.16, 0.17, 0.18, 0.19, 0.20, 0.21, 0.22, 0.23, 0.24, 0.25, or a value between any two of the values. According to some embodiments, the I_{D}/I_{G} of the first carbon-based material may be in a range of 0.13 to 0.20, 0.20 to 0.25, 0.18 to 0.25, etc. When the I_{D}/I_{G} of the first carbon-based material falls within the above range, the material, particularly the surface of the material, may have a low degree of amorphousness of carbon, and the first carbon-based material may have fewer side reactions at a high temperature, which is beneficial to the high-temperature storage performance of the secondary battery.

In some embodiments, the I_{D}/I_{G} of the second carbon-based material is 0.40 to 0.60. Illustratively, the I_{D}/I_{G} of the second carbon-based material may be 0.40, 0.42, 0.44, 0.46, 0.48, 0.50, 0.60, or a value between any two of the values. According to some embodiments, the I_{D}/I_{G} of the second carbon-based material may be in a range of 0.40 to 0.47, 0.40 to 0.45, 0.41 to 0.50, 0.42 to 0.47, 0.46 to 0.60, 0.48 to 0.60, 0.50 to 0.60, etc. When the I_{D}/I_{G} of the second carbon-based material falls within the above range, the carbon on the surface of the material has a higher degree of disorder, thereby providing appropriate reactivity and improving the low-temperature kinetics performance of the secondary battery.

The combination of the first carbon-based material and the second carbon-based material within the above ranges, as the negative electrode active material, can give play to the respective advantageous performances of the materials, thus providing the secondary battery improved high-temperature storage performance and low-temperature kinetics performance.

In some embodiments, the I_{3R(101)}/I_{2H(004)} in the XRD diffraction pattern of the first carbon-based material is less than the I_{3R(101)}/I_{2H(004)} in the XRD diffraction pattern of the second carbon-based. In more specific embodiments, the I_{3R(101)}/I_{2H(004)} in the XRD diffraction pattern of the first carbon-based material is less than or equal to 0.06, more optionally 0 to 0.06. In more specific embodiments, the I_{3R(101)}/I_{2H(004)} of the second carbon-based material is ≥ 0.2, more optionally 0.22 to 0.4. The I_{3R(001)} is the diffraction peak intensity of the 101 crystal plane of the 3R phase of a carbon-based material corresponding to 43° to 44° in an XRD diffraction pattern, and the I_{2H(004)} is the diffraction peak intensity of the 004 crystal plane of the 2H phase of a carbon-based material corresponding to 53° to 55° in an XRD diffraction pattern. Illustratively, in the XRD diffraction pattern of the first carbon-based material, the I_{3R}/I_{2H} may be 0, 0.01, 0.02, 0.03, 0.04, 0.06, etc. Illustratively, in the XRD diffraction pattern of the second carbon-based material, the I_{3R}/I_{2H} may be 0.20, 0.23, 0.25, 0.27, 0.30, 0.33, 0.35, 0.38, 0.4, etc.

In the XRD diffraction pattern, a remarkable diffraction peak of the 3R phase relative to the diffraction peak of the 2H phase generally suggests that the measured material is natural graphite.

According to specific embodiments, the second carbon-based material is natural graphite. Natural graphite has more pores and can provide a greater reaction surface, which is beneficial to the transmission of active particles and the acceleration of the reaction, thus possessing excellent low-temperature kinetics performance. Therefore, the first carbon-based material has a surface with stable properties and reduced side reactions, and can improve the high-temperature storage performance of the secondary battery. Thus, the combination of the first carbon-based material and the second carbon-based material, as the negative electrode active material, enables the combination of low-temperature kinetics performance with high-temperature storage performance in the secondary battery. In some embodiments, the volume distribution particle size Dv50 of the first carbon-based material is greater than the volume distribution particle size Dv50 of the second carbon-based material. The first carbon-based material mainly improves the high-temperature storage performance of the battery. When the first carbon-based material has a great particle size, the side reaction between the surface of the material and the electrolytic solution is further reduced, thereby further improving the high-temperature storage performance of the secondary battery. In addition, when the second carbon-based material has a small particle size, the pores between particles in the first carbon material and the second carbon material can be properly distributed, thereby further improving the low-temperature kinetics performance.

In some specific embodiments, the volume distribution particle size Dv50 of the first carbon-based material is ≥ 15 µm, optionally 16 µm ≤ Dv50 ≤ 20 µm. Exemplarily, the volume distribution particle size Dv50 of the first carbon-based material may be 15 µm, 16 µm, 17 µm, 18 µm, 19 µm, 20 µm, etc., or a value between any two of the values. A volume distribution particle size Dv50 of the particles of the first carbon-based material within the above range is beneficial to reducing the specific surface area of the first carbon-based material, reducing side reactions, and improving the storage performance of the secondary battery, while preventing excessive loss of kinetics performance and keeping a balance between the low-temperature kinetics performance and the high-temperature storage performance of the secondary battery.

In some specific embodiments, the volume distribution particle size Dv50 of the second carbon-based material is ≤ 13 µm, optionally 7 µm ≤ Dv50 ≤ 12 µm. According to specific embodiments, the range of the volume distribution particle size Dv50 of the second carbon-based material may be 9 µm to 12 µm or 10 µm to 12 µm. Illustratively, the volume distribution particle size Dv50 of the second carbon-based material may be 6 µm, 7 µm, 8 µm, 9 µm, 10 µm, 11 µm, 12 µm, 13 µm, etc., or a value between any two of the values. The small volume distribution particle size of the second carbon-based material helps improve the contact between the carbon-based materials and reduce the transmission distance of the active ions, thereby further improving the kinetics performance of the secondary battery at a low temperature.

In some embodiments, the BET specific surface area of the first carbon-based material is less than the BET specific surface area of the second carbon-based material. The first carbon-based material has a relatively small specific surface area and fewer side reactions with the electrolytic solution, which is further beneficial to improving the high-temperature storage performance of the secondary battery.

In some specific embodiments, the BET specific surface area of the first carbon-based material is ≤ 2.1 m²/g, optionally 1.3 m²/g to 1.9 m²/g. Exemplarily, the BET specific surface area of the first carbon-based material is 1.3 m²/g, 1.4 m²/g, 1.5 m²/g, 1.6 m²/g, 1.7 m²/g, 1.8 m²/g, 1.9 m²/g, etc., or a value between any two of the values. When the specific surface area of the first carbon-based material falls within the above range, the smaller specific surface area is advantageous for the storage performance of the secondary battery.

In some specific embodiments, the BET specific surface area of the second carbon-based material is ≤ 3.6 m²/g, optionally 1.8 to 3.4 m²/g. Illustratively, the specific surface area of the second carbon-based material may be 1.8 m²/g, 1.9 m²/g, 2.0 m²/g, 2.1 m²/g, 2.2 m²/g, 2.3 m²/g, 2.4 m²/g, 2.5 m²/g, 2.6 m²/g, 2.7 m²/g, 2.8 m²/g, 2.9 m²/g, 3.0 m²/g, 3.1 m²/g, 3.2 m²/g, 3.3 m²/g, 3.4 m²/g, etc., or a value between any two of the values. A specific surface area of the second carbon-based material within the above range can provide better low-temperature kinetics performance.

In some embodiments, the degree of graphitization of the first carbon-based material is greater than the degree of graphitization of the second carbon-based material.

In some specific embodiments, the degree of graphitization of the first carbon-based material is ≥ 95%, optionally 96.0% to 98.5%. Illustratively, the degree of graphitization of the first carbon-based material may be 95% to 98%, 96% to 98%, or the like. The degree of graphitization of the second carbon-based material is ≥ 95%, optionally 95.0% to 97.5%. Illustratively, the degree of graphitization of the second carbon-based material is 95% to 97.3%, 96% to 97.3%, or the like. The high degrees of graphitization of the two carbon-based materials can further improve the energy density of the battery.

In some embodiments, the first carbon-based material includes an external region and an internal region located inside the external region, where the external region refers to a region extending from the surface of a particle of the first carbon-based material to the interior of the particle by a distance of 2.5 µm; in a cross-sectional view of the first carbon-based material, with the total pore area of the external region being denoted as S1 and the total pore area of the internal region being denoted as S2, S2 > S1.

That the first carbon-based material in the present disclosure satisfies "S2 > S1" means that the first carbon-based material is provided with pore structures that can be directly observed from a cross-sectional image (e.g., a scanning electron microscope image with 1000-fold magnification). That is, there are fewer pore structures in the external region in the main body structure of the first carbon-based material.

In contrast, as described above, that the second carbon-based material is "provided with pore structures" means that the second carbon-based material also has pore structures that can be directly observed from a cross-sectional image (for example, a scanning electron microscope image with 1000-fold magnification). The distributions of such pore structures in different regions of the cross-sectional image are not significantly different.

The first carbon-based material and the second carbon-based material can be distinguished by a cross-section polisher. For example, the types of the first carbon-based material and the second carbon-based material may be distinguished by performing an ion-polished cross-section profile (CP) test on the negative electrode plate. Specifically, the negative electrode plate can be cut into samples to be tested with a certain size (e.g., 2 cm × 2 cm), and fixed on a sample stage. The sample stage is placed into a sample holder and locked in place, an argon ion cross-section polisher (e.g., the IB-09010 CP argon ion cross-section polisher from JEOL Ltd., Japan) is turned on and evacuated (e.g., 10⁻⁷ Pa). After setting the argon flow (e.g., 0.12 MPa) and polishing time (e.g., 90 min), the sample stage is adjusted to an oscillation mode to begin polishing. A region of the sample to be tested is randomly selected for scanning (e.g., scanning using a scanning electron microscope with reference to JY/T010-1996), and the ion-polished cross-section profile (CP) image of the negative electrode plate is obtained at a certain magnification (e.g., 1000-fold). The first carbon-based material and the second carbon-based material can be distinguished from the image by the pore structures on the cross-section of the particles of the carbon-based materials.

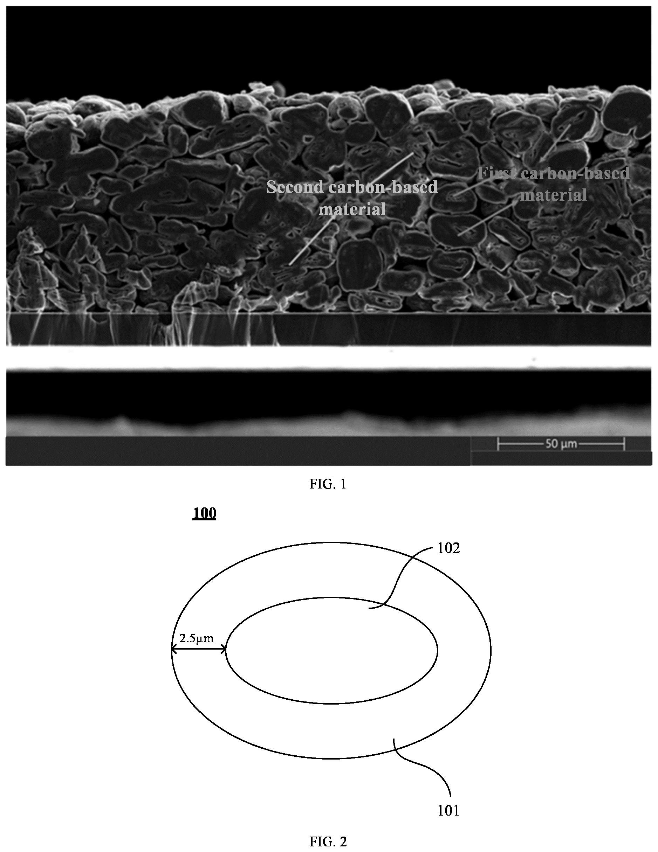

Illustratively, referring to FIG. 1, FIG. 1 is a scanning electron microscope (SEM) image of a longitudinal section of a negative electrode plate according to Example 1 of the present disclosure. As can be seen from the figure, the number of pore structures in the external region of some particles (particles of the first carbon-based material) is significantly lower than that in the internal region, while the distribution of pore structures in various regions of the cross-section of some other particles (particles of the second carbon-based material) is substantially uniform.

Further referring to FIG. 2, shown is a schematic view of a cross-sectional image of a particle of a first carbon-based material 100 according to the present disclosure, and the cross-sectional image passes through the center of the particle of the first carbon-based material 100. As shown in FIG. 2, the region extending from the surface of the particle of the first carbon-based material 100 to the interior of the particle by a distance of 2.5 µm is the external region 101, and the region inside the external region 101 is the internal region 102.

According to the above definition, when the first carbon-based material satisfies that S2 is greater than S1, it indicates that the structure of the external region of the material is denser than that of the internal region. Such a structure is beneficial to improving the stability of the material and reducing the expansion during the charging and discharging cycle, thereby improving the cycle life of the secondary battery. In addition, fewer pores in the external region may also be conducive to reducing side reactions and the consumption of active ions, which is beneficial to improving the high-temperature storage performance of the secondary battery.

Further, the first carbon-based material satisfies 2.5 ≤ S2/S1 ≤ 460. Illustratively, the first carbon-based material satisfies 2.5 ≤ S2/S1 ≤ 400, 2.8 ≤ S2/S1 ≤ 300, 2.5 ≤ S2/S1 ≤ 200, 3.0 ≤ S2/S1 ≤ 300, 5.0 ≤ S2/Sl ≤ 200, 5.0 ≤ S2/S1 ≤ 150, 5.0 ≤ S2/S1 ≤ 100, or the like. A greater value of S2/S1 indicates that a greater pore area is present in the internal region, i.e., a smaller pore area or fewer pore structures present in the external region. Pore structures of the first carbon-based material satisfying the above conditions are mainly located in the internal region of the particles, thereby reserving a required expansion space for the volume change of the particle and reducing the risk of generating a new interface when the first carbon-based material particle is broken. Also, the reduced pore area, or reduced pore structures, in the external region can reduce side reactions between the surface of the material and the electrolytic solution and the consumption of active ions. In addition, the reduced pore structures in the external region can prevent the electrolytic solution from wetting the pore structures inside the material, and reduce side reactions between the surface of the internal pores and the electrolytic solution. Therefore, the first carbon-based material provides the secondary battery good storage performance in high-temperature conditions without compromising the cycle life.

In some embodiments, the area of a single pore structure in the external region of the first carbon-based material is less than or equal to 0.15 µm², optionally less than or equal to 0.13 µm²; and/or, the internal region of the first carbon-based material includes one or more pore structures having a pore area of greater than or equal to 0.15 µm², and optionally includes one or more pore structures having a pore area of 0.15 µm² to 2.0 µm². That the external region of the first carbon-based material includes pore structures of the above sizes suggests a relatively denser external region of the particles of the material and a small size of the pore structures. With this structure of the first carbon-based material, the electrolytic solution will not easily enter the interior of the particles, thereby reducing the side reactions with the electrolytic solution. In addition, the inclusion of the pore structures of the above sizes in the internal region of the first carbon-based material can reserve a sufficient and stable expansion space for the volume change of the particles of the first carbon-based material and improve the compaction density of the negative electrode film layer. The first carbon-based material having the structural characteristics can improve the high-temperature storage performance and energy density of the secondary battery without compromising the cycle performance.

In addition to satisfying the above design, when the first carbon-based material further satisfies one or more of the following properties, the performance of the secondary battery can be further improved, for example, at least one of the energy density, high-temperature storage performance, low-temperature kinetics performance, and the like of the secondary battery is further improved.

The first carbon-based material of the present disclosure is natural graphite, and particles of the natural graphite generally have more pore structures in the entire region. For example, if the particle of natural graphite is also divided into an internal region and an external region (a region extending from the surface of the particle of natural graphite to the interior of the particle by a distance of 2.5 µm is the external region), both the internal region and the external region of the natural graphite are provided with a plenty of pore structures.

In some embodiments, the powder compaction density of the first carbon-based material at 50,000 N is ≤ 2.10 g/cm³, optionally 1.85 g/cm³ to 2.00 g/cm³. Illustratively, the powder compaction density of the first carbon-based material at 50,000 N is 1.85 g/cm³, 1.90 g/cm³, 1.95 g/cm³, 2.00 g/cm³, or 2.05 g/cm³. When the powder compaction density of the first carbon-based material falls within the above range, the compaction density of the negative electrode film layer can be increased, thereby increasing the energy density of the secondary battery. This is beneficial to forming proper pore passage structures between the particles of the negative electrode film layer and improving the transmission performance for active ions and electrons, thereby improving the kinetics performance of the secondary battery.

In some embodiments, the volume distribution particle size Dv90 of the first carbon-based material is ≤ 40 µm, optionally 30 µm to 38 µm. Exemplarily, the volume distribution particle size Dv90 of the first carbon-based material is 30 µm, 33 µm, 35 µm, 37 µm, 38 µm, etc., or a value between any two of the values. A volume distribution particle size Dv90 of the particles of the first carbon-based material within the above range is beneficial to reducing the specific surface area of the first carbon-based material, reducing side reactions, and improving the storage performance of the secondary battery.

In some embodiments, the particle size distribution [(Dv90)-(Dv10)]/(Dv50)] of the first carbon-based material is ≤ 1.55, optionally 0.90 to 1.50. Exemplarily, the particle size distribution [(Dv90)-(Dv10)]/(Dv50)] of the first carbon-based material is 0.90, 1.00, 1.10, 1.20, 1.30, 1.40, 1.50, etc., or a value between any two of the values. A particle size distribution of the first carbon-based material within the foregoing range may result in good particle packing efficiency of the first carbon-based material, thereby helping improve the compaction density of the negative electrode film layer and increase the energy density of the secondary battery. In addition, it is beneficial to forming proper pore passage structures between the particles of the negative electrode film layer, and improving the transmission performance for active ions and electrons and the kinetics performance of the secondary battery.

In some embodiments, the specific capacity of the first carbon-based material is ≥ 362 mAh/g, optionally 365 mAh/g to 372 mAh/g. Illustratively, the specific capacity of the first carbon-based material is 363 mAh/g, 365 mAh/g, 368 mAh/g, 370 mAh/g, or 372 mAh/g. A specific capacity of the first carbon-based material within the above range can provide the secondary battery improved energy density.

In some embodiments, the first carbon-based material includes a primary particle, and optionally, the number proportion of the primary particle in the first carbon-based material is greater than or equal to 80%. According to some embodiments, the number proportion of the primary particle in the first carbon-based material is greater than or equal to 85%, 90%, 95%, or even 100%. The first carbon-based material being primary particles is beneficial to the low-temperature kinetics performance of the secondary battery.

According to some embodiments, the surface of the first carbon-based material has no coating layer.

According to other embodiments, at least part of the surface, optionally the entire surface, of the first carbon-based material may have a coating layer, particularly a carbon coating layer (e.g., an amorphous carbon coating layer). Generally, the carbon coating layer is formed on the surface of the material by mixing a coating material such as asphalt with a raw material (for example, the first carbon-based material having a predetermined particle size), and then performing thermal treatment at a specific temperature. The thickness and the preparation method of the coating layer of the first carbon-based material are not specified in the present disclosure, and those skilled in the art can use any known method to acquire the first carbon-based material having the coating layer on the surface according to actual needs.

According to some embodiments, at least part of the surface, optionally the entire surface, of the second carbon-based material may have a coating layer, particularly a carbon coating layer (e.g., an amorphous carbon coating layer), which can further promote the transmission of active ions, thereby further improving the low-temperature kinetics performance of the secondary battery.

Generally, the carbon coating layer is formed on the surface of the material by mixing a coating material such as asphalt with a raw material (for example, natural graphite having a predetermined particle size), and then performing thermal treatment at a specific temperature. The thickness and the preparation method of the coating layer of the second carbon-based material are not specified in the present disclosure, and those skilled in the art can use any known method to acquire the second carbon-based material having the coating layer on the surface according to actual needs.

In addition to satisfying the above design, when the second carbon-based material further satisfies one or more of the following properties, the performance of the secondary battery can be further improved, for example, at least one of the high-temperature storage performance, low-temperature kinetics performance, and the like of the secondary battery is further improved.

In some embodiments, the specific capacity of the second carbon-based material is ≥ 358 mAh/g, optionally 360 mAh/g to 367 mAh/g. Illustratively, the specific capacity of the second carbon-based material is 360 mAh/g, 362 mAh/g, 364 mAh/g, or 366 mAh/g. A specific capacity of the second carbon-based material within the above range can provide the secondary battery improved energy density.

In some embodiments, the compaction density of the second carbon-based material at 50,000 N is ≤ 1.95 g/cm³, optionally 1.75 g/cm³ to 1.90 g/cm³. Illustratively, the powder compaction density of the second carbon-based material at 50,000 N is 1.75 g/cm³, 1.80 g/cm³, 1.85 g/cm³, or 1.90 g/cm³. A powder compaction density of the second carbon-based material within the above range is beneficial to forming proper pore passage structures between the particles of the negative electrode film layer and improving the transmission performance for active ions and electrons, thereby improving the kinetics performance of the secondary battery.

In some embodiments, the second carbon-based material includes a primary particle, and optionally, the number proportion of the primary particle in the second carbon-based material is greater than or equal to 80%. According to some other embodiments, the number proportion of the primary particle in the second carbon-based material is greater than or equal to 85%, 90%, 95%, or even 100%. The second carbon-based material being primary particles is beneficial to the low-temperature kinetics performance of the secondary battery.

In specific embodiments, the second carbon-based material includes or is natural graphite. Advantageously, the second carbon-based material includes or is a natural graphite with a coating layer.

In some embodiments, in the negative electrode active material, the mass proportion of the first carbon-based material is greater than that of the second carbon-based material in the negative electrode active material. Since the second carbon-based material has a relatively greater I_{D}/I_{G} and a large number of surface defects, its excessive use will further affect the high-temperature storage performance of the battery. Therefore, an appropriate mixing ratio of the two may combine better high-temperature storage performance and better low-temperature kinetics performance in the battery.

According to specific embodiments, the mass proportion of the first carbon-based material is ≥ 55 wt%, optionally 60 wt% to 80 wt%, further optionally 65 wt% to 80 wt%, or even 70 wt% to 80 wt%. Illustratively, in the negative electrode active material, the mass proportion of the first carbon-based material is 60 wt%, 65 wt%, 70 wt%, 75 wt%, or 80 wt%. A mass proportion of the first carbon-based material in the negative electrode active material within the above range can give play to advantages of the first carbon-based material and the second carbon-based material, so as to acquire improved storage performance without compromising the cycle performance and energy density.

In some embodiments, in the negative electrode active material, the mass proportion of the second carbon-based material is ≤ 45 wt%, optionally 20 wt% to 40 wt%, further optionally 20 wt% to 35 wt%, or even 20 wt% to 30 wt%. Illustratively, in the negative electrode active material, the mass proportion of the second carbon-based material is 20 wt%, 25 wt%, 30 wt%, 35 wt%, or 40 wt%.

In some embodiments, the negative electrode active material consists of the first carbon-based material and the second carbon-based material described above.

In other embodiments, the negative electrode active material further includes an additional negative electrode active material known in the art, such as a silicon-based material. The silicon-based material can serve to improve the pore passage structure in the negative electrode film layer, thereby facilitating the infiltration and the liquid retention of the electrolytic solution, and improving the kinetics performance of the secondary battery. In addition, the negative electrode capacity can also be improved, thereby further improving the energy density of the secondary battery.

The silicon-based material is not specified in the present disclosure, and a silicon-based material conventionally used as a negative electrode active material in the art may be used. Illustratively, the silicon-based material may be selected from at least one of elemental silicon, a silicon-oxygen compound, a silicon-carbon composite, a silicon-nitrogen composite, and a silicon alloy.

In some embodiments, the mass proportion of the silicon-based material in the negative electrode active material is ≤ 15wt%, optionally 3 wt% to 10 wt%. Therefore, the kinetics performance and the energy density of the secondary battery can be improved without compromising the cycle performance and storage performance of the secondary battery.

The negative electrode active material in each of the embodiments described above favorably further satisfies at least one of the following.
(1) The volume distribution particle size Dv50 of the negative electrode active material is ≤ 17.0 µm, optionally 12 µm to 16.5 µm.
(2) The volume distribution particle size Dv90 of the negative electrode active material is ≤ 35 µm, optionally 25 µm to 33 µm.
(3) The volume particle size distribution of the negative electrode active material satisfies: (Dv90-Dv10)/Dv50 ≤ 1.50, optionally 1.0 to 1.45.
(4) The specific surface area of the negative electrode active material is ≤ 3.0 m²/g, optionally 1.5 m²/g to 2.8 m²/g.

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber. The content of the conductive agent, if any, in the negative electrode film layer is not specified in the present disclosure. Those skilled in the art can determine a suitable content of the conductive agent through routine tests in the art.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes other auxiliary agents, such as a thickener (e.g., sodium carboxymethylcellulose (CMC-Na)).

The content of the binder and/or other auxiliary agents, if any, in the negative electrode film layer is not specified in the present disclosure. Those skilled in the art can determine a suitable content of the binder and/or other auxiliary agents through routine tests in the art.

A negative electrode film layer satisfying at least one of the following can improve at least one of the high-temperature storage performance, low-temperature kinetics performance, energy density, and the like of the secondary battery.

In some embodiments, the compaction density of the negative electrode film layer is ≥ 1.5g/cm ³, optionally 1.6 g/cm³ to 1.7 g/cm³. Exemplarily, the compaction density of the negative electrode film layer is 1.6 g/cm³, 1.65 g/cm³, 1.70 g/cm³, etc., or a value between any two of the values.

In some embodiments, the areal density of the negative electrode film layer is ≥ 10 mg/cm², optionally 11.0 to 15.5 mg/cm². Exemplarily, the compaction density of the negative electrode film layer is 10 mg/cm², 11 mg/cm², 12 mg/cm², 13 mg/cm², 14 mg/cm², 15 mg/cm², 15.5 mg/cm², etc., or a value between any two of the values, but is not limited thereto.

In some embodiments, the porosity of the negative electrode film layer is 16% to 30%, optionally 19% to 27%. Exemplarily, the porosity of the negative electrode film layer is 17%, 19%, 21%, 23%, 25%, 27%, etc., or a value between any two of the values. Therefore, this is beneficial to combining a high capacity with proper pore passage structures in the negative electrode film layer, thereby facilitating achieving a high energy density and favorable storage performance and kinetics performance of the secondary battery.

In some embodiments, the thickness of the negative electrode film layer is ≥ 70 µm, optionally 90 µm to 130 µm. Exemplarily, the thickness of the negative electrode film layer is 90 µm, 100 µm, 110 µm, 120 µm , 130 µm, etc., or a value between any two of the values, but is not limited thereto.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

The above embodiments are described only by taking the composition of the negative electrode film layer on one side surface of the negative electrode current collector as an example. It will be appreciated that the negative electrode current collector is provided with two surfaces opposite to each other in its own thickness direction, and the negative electrode film layer described in the above embodiments is disposed on any one or both of the two opposite surfaces of the negative electrode current collector. It should be noted that the parameters of the negative electrode film layer provided in the present disclosure (e.g., compaction density, areal density, porosity, thickness) refer to the parameters of the negative electrode film layer on one side of the negative electrode current collector. When the negative electrode film layer is disposed on both sides of the negative electrode current collector, if the parameters of the negative electrode film layer on either side meet the requirements of the present disclosure, it shall be considered to fall within the protection scope of the present disclosure.

In the present disclosure, the negative electrode plate described above does not exclude additional functional layers other than the negative electrode film layer. For example, in some embodiments, the negative electrode plate further includes a conductive bottom coating (e.g., composed of a conductive agent and a binder) interposed between the negative electrode current collector described above and the negative electrode film layer described above and disposed on the surface of the negative electrode current collector described above. In some embodiments, the negative electrode plate further includes a protective layer covering the surface of the negative electrode film layer described above.

In the present disclosure, the I_{D}/I_{G} value of the material (e.g., the first carbon-based material, the second carbon-based material, etc.) may be tested using a Raman spectrometer, where the I_{D} denotes the D peak intensity at 1350 ± 50 cm⁻¹ in the Raman spectrum of the material, and the I_{G} denotes the G peak intensity at 1580 ± 50 cm⁻¹ in the Raman spectrum of the material. The test conditions may be: an excitation wavelength of 532 nm, a grating of 600 reticles, an objective lens of 50 folds, an integration time of 10 s, a total of 3 times, plane scanning. The D peak and G peak intensities of 100 points are acquired, and the I_{D}/I_{G} values of the 100 points are calculated. 25 maximum and minimum I_{D}/I_{G} values are removed, and the average value of the remaining 50 points is the I_{D}/I_{G} of the material. The Horiba LabRAM HR800 Raman spectrometer may be used as the test instrument.

In the present disclosure, the I_{3R(101)}/I_{2H(004)} value in the XRD diffraction pattern of the material (e.g., the first carbon-based material, the second carbon-based material, etc.) may be tested by using an X-ray diffractometer according to JIS K 0131-1996 to obtain the X-ray diffraction pattern of the carbon material. The test conditions may be as follows: The carbon material is subjected to a flat plate sampling method, a CuKα ray is used as the radiation source, and a copper target is used as the anode target. The voltage is 40 kV, the current is 40 mA, the anti-scattering slit is 1 mm, the scanning angle range 2θ is 20°-80°, the step size is 0.01671°, the duration of each step is 0.24 s, and the scanning rate is 4°/min. The Bruker D8 Discover X-ray diffractometer may be used as the test instrument. The 2θ of the diffraction peak of the 101 crystal plane of the 3R phase is in a range of 43° to 44°, the 20 of the diffraction peak of the 004 crystal plane of the 2H phase is in a range of 53° to 55°, and the 20 of the diffraction peak of the 012 crystal plane of the 3R phase is in a range of 46° to 47°. The peak intensity of the diffraction peak of the 101 crystal plane of the 3R phase and the peak intensity of the diffraction peak of the 004 crystal plane of the 2H phase are represented by the integrated areas of the corresponding diffraction peaks.

In the present disclosure, the volume distribution particle sizes Dv10, Dv50, and Dv90 of the materials (e.g., the first carbon-based material, the second carbon-based material, etc.) have meanings well known in the art, which respectively represent the particle sizes corresponding to the cumulative volume distribution percentages of the materials reaching 10%, 50%, and 90%, and can be measured using instruments and methods known in the art. For example, a laser particle size analyzer may be used for the measurement with reference to GB/T 19077-2016. The test instrument may be the Mastersizer 3000 laser particle size analyzer from Malvern Instruments Ltd., United Kingdom.

In the present disclosure, the BET specific surface area of the material (e.g., the first carbon-based material, the second carbon-based material, etc.) has a meaning well known in the art, and can be measured using instruments and methods known in the art. For example, the specific surface area of the material can be measured using the analysis and test method of specific surface area by nitrogen adsorption with reference to GB/T 19587-2017, and calculated by the BET (Brunauer Emmett Teller) method. The test instrument may be the Tri-Star 3020 specific surface area pore size analysis tester from Micromeritics, USA.

In the present disclosure, the degree of graphitization of the material (e.g., the first carbon-based material or the second carbon-based material) has a meaning well known in the art, and can be measured using instruments and methods known in the art. For example, an X-ray diffractometer (e.g., Bruker D8 Discover) may be used for the measurement. The measurement may be performed with reference to JIS K 0131-1996 and JB/T 4220-2011 to give the average interlayer spacing d ₀₀₂ of the C(002) crystal plane in the crystal structure of the material, and then the degree of graphitization is calculated according to the formula g = (0.344 - d₀₀₂)/(0.344 - 0.3354) × 100%. In the above formula, d₀₀₂ is the average interlayer spacing of the C(002) crystal plane in the material crystal structure in nanometers (nm).

In the present disclosure, the pore area and the values of S1 and S2 of the first carbon-based material can acquire a cross-section of the first carbon-based material by using a cross-section polisher (for example, an IB-09010 CP argon ion cross-section polisher from JEOL Ltd., Japan); then, with reference to JY/T010-1996, the cross-section of the first carbon-based material is scanned using a scanning electron microscope (e.g., a Sigma 300 scanning electron microscope manufactured by ZEISS, Germany); finally, the pore area of any pore in the first carbon-based material, the total pore area S2 of the internal region, and the total pore area S1 of the external region are acquired using image processing software (e.g., AVIZO), so as to give the value of S2/S1. Illustratively, samples may be obtained from different regions of a negative electrode plate in a secondary battery, at least 5 (e.g., 5, 10, 15, or even more) positions are randomly selected from the sample to acquire the cross-sections by using a cross-section polisher. The cross-sections of at least 10 particles (e.g., 10, 20, 50, or even more particles) are randomly selected from scanning electron microscope images of the cross-sections, the total pore area S2' of the internal region and the total pore area S1' of the external region of each particle cross-section are acquired by using image processing software according to the above definition, so as to give the S2'/S1' value of each particle cross-section. The arithmetic mean value of S2'/S1' of all measured particle cross-sections is calculated as the S2/S1 value of the first carbon-based material.

In the present disclosure, the specific capacity of the material (e.g., the first carbon-based material, the second carbon-based material, etc.) has a meaning well known in the art, and can be measured using methods known in the art. An exemplary test method is as follows: The sample powder, a conductive agent carbon black (Super P), and a binder polyvinylidene fluoride (PVDF) are mixed uniformly in a mass ratio of 91.6:1.8:6.6 in a solvent N-methylpyrrolidone (NMP) to give a slurry; the prepared slurry is applied to a surface of a negative electrode current collector copper foil and dried in an oven for later use; ethylene carbonate (EC), ethyl methyl carbonate (EMC), and diethyl carbonate (DEC) are mixed in a volume ratio of 1:1:1 to give an organic solvent, and then LiPF₆ is dissolved in the organic solvent to prepare an electrolytic solution with a concentration of 1 mol/L; then, a CR2430 button battery is assembled using the electrolytic solution in an argon-protected glove box with a metallic lithium foil as the counter electrode and a polypropylene (PP) thin film as the separator; the obtained button battery is left to stand for 12 h, then discharged at a constant current of 0.05 C to 0.005 V at 25 °C, left to stand for 10 min, then discharged at a constant current of 50 µA to 0.005 V, left to stand for 10 min, and then discharged at a constant current of 10 µA to 0.005 V, and then charged at a constant current of 0.1 C to 2 V, and the charging capacity is recorded. The ratio of the charging capacity to the mass of the sample is defined as the specific capacity of the corresponding material (e.g., the first carbon-based material, the second carbon-based material, etc.).

In the present disclosure, whether the coating layer is present on the surface of the material (e.g., the first carbon-based material, the second carbon-based material, etc.) can be determined by a transmission electron microscope.

In the present disclosure, the powder compaction density of the material (e.g., the first carbon-based material, the second carbon-based material, etc.) has a meaning well known in the art, and can be measured using instruments and methods known in the art. For example, the measurement may be performed with reference to GB/T 24533-2009 using an electronic compression tester (e.g., UTM7305 electronic compression tester). An exemplary measurement method is as follows: 1 g of sample powder is placed into a mold with a base area of 1.327 cm², the pressure is increased to 50,000 N and held for 30 s, then the pressure is released and held for 10 s, and subsequently the powder compaction density of the material under the pressure of 50,000 N is recorded and calculated.

In the present disclosure, the number proportion of the primary particles in the first carbon-based material and/or the second carbon-based material is determined as follows: A test sample is randomly selected from the negative electrode film layer, a plurality of test regions are randomly selected from the test sample, and images of the plurality of test regions are acquired using a scanning electron microscope. The number proportion of the first carbon-based materials exhibiting a primary particle morphology in the total number of the particles of the first carbon-based material is counted in each image. The average value of the plurality of statistical results is taken as the number proportion of the primary particles in the first carbon-based material.

In the present disclosure, the areal density of the negative electrode film layer has a meaning well known in the art and can be measured using methods known in the art. For example, a single-side coated and cold-pressed negative electrode plate may be used (if a double-side coated negative electrode plate is used, the negative electrode film layer on one side may be wiped off first) and punched into small circular samples with an area of S'. The sample is weighed, and the weight is recorded as M1. The negative electrode film layer of the above weighed negative electrode plate is then wiped off, and the weight of the negative electrode current collector is measured and recorded as M0. The areal density of the negative electrode plate = (M1 - M0)/S'.

In the present disclosure, the compaction density of the negative electrode film layer has a meaning well known in the art and can be measured using methods known in the art. [The compaction density of the negative electrode film layer = the areal density of the negative electrode film layer/the thickness of the negative electrode film layer].

The thickness of the negative electrode film layer has a meaning well known in the art and can be measured using methods known in the art, for example, using a micrometer (e.g., Mitutoyo293-100, with precision of 0.1 µm). It should be noted that the thickness range given in the present disclosure is the thickness range of the negative electrode film layer on one side of the negative electrode current collector. A negative electrode film layer on any side of the negative electrode current collector having a thickness within the range given in the present disclosure satisfies the present disclosure.

In the X-ray diffraction (XRD) analysis test of the present disclosure, a copper target may be used as the anode target, a CuKα ray is used as the radiation source, the ray wavelength λ = 1.5418 Å, the scanning 2θ angle range is 20° to 80°, and the scanning rate is 4°/min.

It should be noted that various parameter tests for the negative electrode active material or the negative electrode film layer described above may be performed by sampling from a prepared secondary battery according to the following steps.

The secondary battery is subjected to a discharge process (for safety reasons, the secondary battery is typically in a fully discharged state). After disassembly of the secondary battery, the negative electrode plate is extracted and immersed in dimethyl carbonate for a certain period (e.g., 2 h to 10 h). The negative electrode plate is then removed and subjected to a drying process at a certain temperature for a certain duration (e.g., 60 °C for more than 4 h). After drying, the negative electrode plate is collected. At this point, samples can be taken from the dried negative electrode plate to test the above parameters related to the negative electrode film layer, such as the areal density, compaction density, porosity, and thickness of the negative electrode film layer.

The dried negative electrode plate is then baked at a specified temperature and duration (e.g., 400 °C for more than 2 h). From the baked negative electrode plate, a region is randomly selected, and sampling of the negative electrode active material is performed (e.g., using a blade to scrape for powder collection). The collected negative electrode active material is sieved (e.g., using a 200-mesh sieve), so as to ultimately give samples that can be used to test the negative electrode active material parameters described above.

In the present disclosure, the first carbon-based material described above may be prepared by the following method of the present disclosure; the second carbon-based material described above is commercially available, or may be prepared by the following method of the present disclosure.

In some embodiments, the preparation method of the first carbon-based material includes: step 1, providing a raw material having a plurality of pore structures; step 2, uniformly mixing the raw material and a filling material according to a predetermined proportion, holding the mixture at a first temperature T₁ for a first duration t₁, and then cooling the mixture to room temperature to give an intermediate; and step 3, holding the obtained intermediate at a second temperature T₂ for a second duration t₂, so as to give the first carbon-based material having pore structures and satisfying I_{D}/I_{G} ≤ 0.27, where the I_{D} denotes the D peak intensity at 1350 ± 50 cm⁻¹ in a Raman spectrum, and the I_{G} denotes the G peak intensity at 1580 ± 50 cm⁻¹ in a Raman spectrum.

In some embodiments, in step 1, the raw material for preparing the first carbon-based material includes natural graphite. Natural graphite generally refers to graphite naturally formed in nature, which does not require graphitization, and the interior of the natural graphite particles usually contains a large number of closed pore structures. Optionally, the natural graphite includes one or more of flake graphite, natural spherical graphite, and microcrystalline graphite, and particularly includes natural spherical graphite.

The "natural spherical graphite" refers to a natural graphite having a spherical or spheroidal shape, and not all natural graphite particles are controlled to be ideal spheres. In some embodiments, flake graphite may be pretreated to give natural spherical graphite with a desired particle size and desired morphology. Optionally, the above pretreatment includes processes such as crushing, classification, spheroidization, and purification.

In some embodiments, in step 1, the volume distribution particle size Dv50 of the above raw material may be 15 µm to 20 µm.

In some embodiments, in step 1, the specific surface area of the above raw material may be ≥ 2.5 m²/g, optionally 2.5 m²/g to 10.0 m²/g. When the specific surface area of the raw material is within the above range, it is beneficial to performing subsequent filling treatment and acquiring a first carbon-based material with a desired specific surface area.

In some embodiments, in step 2, the softening point temperature of the filling material is 90 °C to 150 °C. Optionally, the softening point temperature of the filling material is 94 °C to 146 °C, 94 °C to 142 °C, 94 °C to 138 °C, 94 °C to 134 °C, 94 °C to 130 °C, 104 °C to 146 °C, 104 °C to 142 °C, 104 °C to 138 °C, 104 °C to 134 °C, or 104 °C to 130 °C.

In some embodiments, in step 2, the volume distribution particle size Dv50 of the filling material is less than or equal to 6 µm, optionally 1 µm to 6 µm, 1 µm to 5 µm, 2 µm to 5 µm, or 3 µm to 5 µm. Therefore, it is beneficial to filling the pore structure of the raw material with molten filling materials and to improving the dispersion uniformity of the filling materials and the raw material.

In some embodiments, in step 2, the coke yield of the filling material is 15% to 40%, optionally 18% to 34%. In the present disclosure, the coke yield of the filling material has a meaning well known in the art, and can be measured by instruments and methods known in the art. For example, the test may be performed with reference to the standard GB/T 8727-2008.

In some embodiments, in step 2, the filling material includes one or more of coal pitch, petroleum pitch, polymer compound, and resin, and optionally includes one or more of coal pitch and petroleum pitch.

In some embodiments, in step 2, the mass ratio of the filling material to the raw material is (10-40):100, optionally (10-30):100, (10-25):100, (10-20):100, (12-30):100, (14-28):100, or (15-25):100.

In step 2, by adjusting one or more parameters of the filling material such as the type, the softening point, the coke yield, and the addition amount within the above ranges, it is beneficial to adjusting the number and/or size of pores in the external region and the internal region of the first carbon-based material within an appropriate range, thereby facilitating the adjustment of S2/S1 of the first carbon-based material within an appropriate range. For example, this can be achieved by adjusting the temperature, the coating amount, the softening point, or the like. Illustratively, when the filling amount is increased, the S2/S1 decreases, and when the softening point of the filling material is increased, S2/S1 increases, so as to give a desired S2/S1.

In addition, the I_{D}/I_{G} value of the first carbon-based material may be adjusted to some extent by adjusting the type and the softening point of the filling material. In general, a higher softening point of the filling material may lead to a smaller I_{D}/I_{G} value.

By adjusting parameters such as the type, the softening point, the coke yield, and the addition amount of the filling material within the above ranges, the molten filling material may have low viscosity and good fluidity and is less likely to bond the raw material particles, such that the agglomeration of the raw material particles in the subsequent preparation process can be reduced, thereby further reducing problems such as an increase in surface defects and an increase in surface active sites of the first carbon-based material particles due to the need to add a depolymerization process.

In some embodiments, in step 2, the heating process of heating a uniform mixture of the raw material and the filling material in a predetermined ratio to the first temperature T₁ is a staged heating process.

In some embodiments, the staged heating process includes a first heating process, a second heating process, and a third heating process.

In some embodiments, the first heating process is to raise the temperature to 200 °C to 250 °C and hold the temperature for 0.5 h to 3 h.

In some embodiments, the second heating process is to raise the temperature to 450 °C to 550 °C and hold the temperature for 0 h to 2 h. When the holding time is 0 h, it means that when the temperature is raised to a range of 450 °C to 550 °C, no holding process is conducted, and the temperature continues to be raised to the first temperature T₁.

In some embodiments, the third heating process is to raise the temperature to the first temperature T₁ and hold the temperature for the first duration t₁.

In the staged heating process, the temperature is first raised to 200 °C to 250 °C. Since the heating temperature is higher than the softening point temperature of the filling material, in this case, the filling material melts and softens upon heating, and a holding time of 0.5 h to 3 h allows the filling material to flow and fill the pore structure of the raw material; when the temperature is raised to 450 °C to 550 °C, the molten and softened filling material undergoes a carbonization reaction and gradually forms a semi-coke state to become a viscous liquid or solid, thereby preventing the filling material from entering all of the pore structures of the raw material; finally, when the temperature is raised to the first temperature, the filling material undergoes a carbonization reaction, thereby enabling the pore structures occupied by the filling material to be effectively filled.

In some embodiments, in step 2, the temperature is raised to the first temperature T₁ at a rate of 1 °C/min to 10 °C/min. For example, the heating rate may be 1 °C/min, 2 °C/min, 3 °C/min, 4 °C/min, 5 °C/min, 6 °C/min, 7 °C/min, 8 °C/min, 9 °C/min, 10 °C/min, or in a range formed by any of the above values.

In some embodiments, the heating rate of the first heating process may be 1 °C/min to 10 °C/min, optionally 1.5 °C/min to 8 °C/min, 1.5 °C/min to 6 °C/min, 2 °C/min to 6 °C/min, or 2 °C/min to 5 °C/min. In some embodiments, the heating rate of the second heating process may be 1 °C/min to 10 °C/min, optionally 2 °C/min to 8 °C/min. In some embodiments, the heating rate of the third heating process may be 1 °C/min to 10 °C/min, optionally 2 °C/min to 8 °C/min.

In some embodiments, in step 2, the first temperature T₁ is 700 °C to 1200 °C. For example, the first temperature T₁ may be 700 °C, 750 °C, 800 °C, 850 °C, 900 °C, 950 °C, 1000 °C, 1050 °C, 1100 °C, 1200 °C, or in a range formed by any of the above values. Optionally, the first temperature T₁ is 750 °C to 1100 °C, 800 °C to 1100 °C, 850 °C to 1100 °C, 900 °C to 1100 °C, or 850 °C to 1000 °C.

In some embodiments, in step 2, the first duration t₁ is 1 h to 5 h. For example, the first duration t₁ may be 1 h, 1.5 h, 2 h, 2.5 h, 3 h, 3.5 h, 4 h, 4.5 h, 5 h, or in a range formed by any of the above values. Optionally, the first duration t₁ is 2 h to 4 h.

When the first temperature and the first duration fall within the above ranges, it is beneficial to adjusting the number and/or size of pores in the external region and the internal region of the carbon material within an appropriate range.

In some embodiments, in step 2, the thermal treatment may be performed in a medium-frequency furnace, a roller kiln, a rotary kiln, a pusher kiln, a vertical pellet mill, a horizontal pellet mill, a vertical reaction kettle, a horizontal reaction kettle, a drum furnace, or other temperature-programmable devices.

In some embodiments, in step 2, the thermal treatment atmosphere may be a protective gas atmosphere. The protective gas may include one or more of nitrogen, argon, and helium.

In step 2, by adjusting one or more of the heating rate, the first temperature, the first duration, the heating process, and the like within the above ranges, it is beneficial to adjusting the number and/or size of pores in the external region and the internal region of the first carbon-based material within an appropriate range, thereby facilitating the adjustment of S1/S of the first carbon-based material within an appropriate range. For example, S1/S ≥ 60% can be achieved by adjusting the heating rate of each stage to be ≤ 3 °C/min, and S1/S ≤ 85% can be achieved by adjusting the heating rate of each stage to be 8-10 °C/min.

In some embodiments, in step 3, the second temperature T₂ is 2070 °C to 2700 °C. Optionally, the second temperature T₂ is 2070 °C to 2570 °C, 2070 °C to 2510 °C, 2070 °C to 2450 °C, 2070 °C to 2360 °C, 2140 °C to 2570 °C, 2140 °C to 2510 °C, 2140 °C to 2450 °C, or 2140 °C to 2360 °C.

In some embodiments, in step 3, the second duration t₂ is 1.5 h to 6 h. For example, the second duration t₁ may be 2 h, 2.5 h, 3 h, 3.5 h, 4 h, 4.5 h, 5 h, 5.5 h, 6 h, or in a range formed by any of the above values. Optionally, the second duration t₂ is 2 h to 5 h.

When the second temperature T₂ and the second duration t₂ fall within the above ranges, it is beneficial to adjusting the I_{D}/I_{G} of the first carbon-based material and beneficial for the first carbon-based material to have a stable structure. Generally, a higher second temperature and/or a longer second duration may lead to a smaller I_{D}/I_{G} of the first carbon-based material.

In some embodiments, in step 3, the thermal treatment may be performed in a medium-frequency furnace, a box-type graphitization furnace, an Acheson graphitization furnace, a continuous graphitization furnace, or an internal series graphitization furnace.

In some embodiments, in step 3, the medium-frequency furnace and the continuous graphitization thermal treatment atmosphere may be a protective gas atmosphere. The protective gas may include one or more of nitrogen, argon, and helium.

In step 3, by adjusting one or more of the second temperature and the second duration within the above ranges, it is beneficial to adjusting the content of disordered carbon in the first carbon-based material within an appropriate range, thereby helping the first carbon-based material to achieve an appropriate degree of graphitization, interlayer spacing, I_{D}/I_{G}, and the like.

In the above preparation method of the first carbon-based material, by adjusting one or more of the parameters of the natural graphite, the parameters of the filling material, the heating rate, the first temperature, the first duration, the heating process, the second temperature, the second duration, and the like within the above ranges, it is beneficial to adjusting the parameters of the first carbon-based material, such as S1/S, I_{D}/I_{G}, degree of graphitization, specific capacity, specific surface area, particle size, powder compaction density, and the like.

In some embodiments, the second carbon-based material is natural graphite. Optionally, the second carbon-based material is natural spherical graphite. Natural graphite having the above properties may be directly provided as the second carbon-based material.

In some embodiments, at least part of the surface of the second carbon-based material is provided with a carbon coating layer. The preparation method of the second carbon-based material having the carbon coating layer includes: providing natural graphite as a raw material; mixing the natural graphite with a coating agent thoroughly in proportion; and performing thermal treatment.

In some embodiments, the natural graphite is natural spherical graphite. The particle size of the natural graphite as the raw material is ≤ 15 µm, optionally 6 µm to 13 µm, e.g., 7 µm to 12 µm.

In some embodiments, the coating agent is selected from one or more of coal pitch, petroleum pitch, phenolic resin, coconut shell, and the like.

In some embodiments, the thermal treatment temperature is 900 °C to 1200 °C. In some embodiments, the thermal treatment duration is 1 h to 5 h. Second carbon-based materials having different I_{D}/I_{G} values may be obtained by adjusting the thermal treatment temperature.

The coating agent is carbonized through the thermal treatment, such that at least part of the surface of the second carbon-based material is provided with the carbon coating layer. In some embodiments, the carbon coating layer is an amorphous carbon coating layer.

### [Positive Electrode Plate]

The positive electrode plate includes a positive electrode current collector and a positive electrode film layer arranged on at least one surface of the positive electrode current collector, and the positive electrode film layer includes the positive electrode active material according to the first aspect of the present disclosure.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, when the battery cell is a lithium-ion battery, a positive electrode active material for use in lithium-ion batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present disclosure is not limited to these materials, and other conventional materials that can be used as the positive electrode active material in batteries may also be used. These positive electrode active materials may be used alone or in a combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.3}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

As Li undergoes deintercalation and consumption in the charging and discharging process of the battery, the molar content of Li varies when the battery is discharged to different states. In the enumeration related to the positive electrode active material in the present disclosure, the molar content of Li is in an initial state in the material, i.e., a pre-feeding state, and when the positive electrode active material is applied to a battery system, the molar content of Li varies after charging and discharging cycles.

In the enumeration related to the positive electrode active material in the present disclosure, the molar content of oxygen is only a theoretical value. The molar content of oxygen will vary due to oxygen release from the crystal lattice, and actually, the molar content of oxygen will fluctuate. Other elements may also vary in molar content after the battery is manufactured and in use. Therefore, the molar ratios of the elements in the molecular formula of the positive electrode active material are molar ratios during preparation.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Electrolyte]

The electrolyte conducts ions between the positive electrode plate and the negative electrode plate. The type of the electrolyte is not specified in the present disclosure, and can be determined as desired. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

### [Separator]

In some embodiments, the battery cell further includes a separator. The type of the separator is not specified in the present disclosure, and any known porous-structure separator with good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the battery cell may include an outer packaging. The outer packaging can be used for packaging the electrode assembly and electrolyte described above.

In some embodiments, the outer packaging of the battery cell may be a hard housing, such as a hard plastic housing, an aluminum housing, or a steel housing. The outer packaging of the battery cell may also be a soft pack, such as a pouch-type soft pack. The soft pack may be made of plastic, and examples of the plastic may include polypropylene, polybutylene terephthalate, polybutylene succinate, and the like.

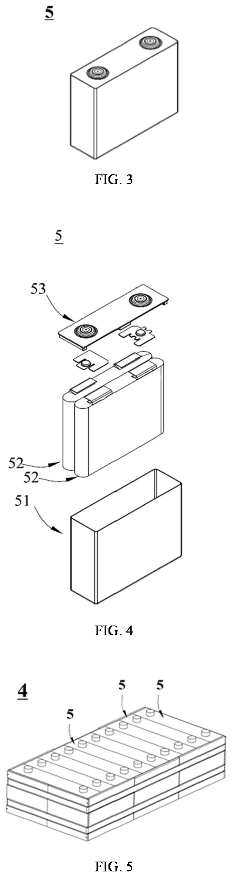

The shape of the battery cell is not specified in the present disclosure, and may be cylindrical, prismatic, or any other shape. For example, FIG. 3 shows a battery cell 5 having a prismatic structure as an example.

In some embodiments, referring to FIG. 4, the outer packaging may include a housing 51 and a top cover assembly 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the top cover assembly 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the battery cell 5 may be one or more, and those skilled in the art can select the number according to specific and actual requirements.

In some embodiments, the battery cell may be assembled into a battery module. The number of battery cells included in the battery module may be one or more, and the specific number may be selected by those skilled in the art based on the use and capacity of the battery module.

FIG. 5 shows a battery module 4 as one example. Referring to FIG. 5, in the battery module 4, a plurality of battery cells 5 may be sequentially disposed in a length direction of the battery module 4. Certainly, the arrangement may also be in any other manner. Further, the plurality of battery cells 5 may be fixed by fasteners.

Optionally, the battery module 4 may further include an outer shell having an accommodating space in which the plurality of battery cells 5 are accommodated.

In some embodiments, the battery module described above may also be assembled into a battery pack. The number of battery modules included in the battery pack may be one or more, and the specific number may be selected by those skilled in the art based on the use and capacity of the battery pack.

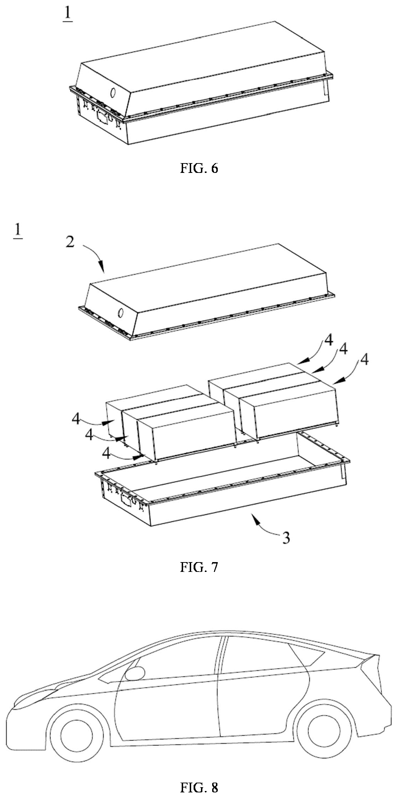

FIGs. 6 and 7 show a battery pack 1 as an example. Referring to FIGs. 6 and 7, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, a second aspect of the present disclosure provides an electric device, including the secondary battery provided in the above embodiments. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

A battery cell, a battery module, or a battery pack may be selected on the basis of the requirements of the electric device.

FIG. 8 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a battery cell may thus be used as the power source.

### Examples

The examples of the present disclosure are illustrated hereinafter. The embodiments described below are exemplary and are merely used to explain the present disclosure, and they should not be construed as limiting the present disclosure. The examples without techniques or conditions specified therein are implemented according to techniques or conditions described in the literature in the art or according to product instructions. Reagents or instruments used herein without specified manufacturers are all commercially available conventional products.

The materials used in the embodiments and comparative examples of the present disclosure are commercially available, or can be prepared by the following process.

### Preparation of material 1-1:

The flake graphite was mechanically crushed, classified, spheroidized, and purified to obtain natural spherical graphite. The natural spherical graphite had a volume distribution particle size Dv50 = 16.3 µm. The acquired natural spherical graphite and a filler petroleum pitch having a softening point of 115 °C were mixed in a mass ratio of 100:25. The mixed material was then placed in a temperature-programmable device, heated to 200 °C and held for 1 h, then heated to 650 °C (first treatment temperature) and held for 2 h, and cooled to room temperature to give an intermediate. The obtained intermediate was placed in a graphitization furnace and subjected to a thermal treatment (second treatment temperature) at 2490 °C, and then subjected to demagnetization and sieving to give material 1-1. Material 1-1 satisfied: I_{D}/I_{G} = 0.18, S2/S1 = 16.1, volume distribution particle size Dv50 = 17.5 µm.

### Preparation of materials 1-2 to 1-4:

The preparation method of materials 1-2 to 1-4 was similar to that of material 1-1, except that: the ratio of natural spherical graphite to the filler was adjusted, and the second treatment temperature was adjusted within the range of 2000 °C to 2600 °C, such that the I_{D}/I_{G} of materials 1-2 to 1-4 fell within the range of 0.13-0.33. Details are as follows:

**Table 1.**

| Material Number | Ratio of natural spherical graphite to filler | Second treatment temperature (°C) | I_{D}/I_{G} of first carbon-based material |
|---|---|---|---|
| 1-1 | 100:25 | 2490 | 0.18 |
| 1-2 | 100:20 | 2580 | 0.13 |
| 1-3 | 100:25 | 2140 | 0.27 |
| 1-4 | 100:30 | 2020 | 0.33 |

### Preparation of materials 1-5 to 1-7:

The preparation method of materials 1-5 to 1-7 was similar to that of material 1-1, except that: the volume distribution particle size Dv50 of natural spherical graphite was adjusted within the range of 15 µm to 21 µm, such that the volume distribution particle size Dv50 of materials 1-5 to 1-7 fell within the range of 16 µm to 22 µm. Details are as follows:

**Table 2.**

| Material Number | Volume distribution particle size of natural spherical graphite Dv50 (µm) | Volume distribution particle size of first carbon-based material Dv50 (µm) |
|---|---|---|
| 1-5 | 15.6 | 16.3 |
| 1-6 | 19.2 | 19.8 |
| 1-7 | 21.0 | 22.0 |

### Preparation of material 2-1:

Natural spherical graphite was provided and mixed thoroughly with petroleum pitch having a softening point of 250 °C in a mass ratio of 100:10. A low-temperature thermal treatment at 1130 °C was performed for 2 h to give a natural graphite with a carbon coating layer, i.e., material 2-1. Material 2-1 satisfied: I_{D}/I_{G} = 0.42, the volume distribution particle size Dv50 = 11.2 µm, and the degree of graphitization was 96.5%.

### Preparation of materials 2-2 to 2-4:

The preparation method of materials 2-2 to 2-4 was similar to that of material 2-1, except that: the ratio of natural spherical graphite to petroleum pitch was adjusted within the range of 100:8 to 100:12, and the low-temperature thermal treatment was adjusted within the range of 900 °C to 1200 °C, such that the I_{D}/I_{G} of materials 2-1 to 2-4 fell within the range of 0.38-0.60. Details are shown in Table 3.

**Table 3.**

| Material Number | Ratio of natural spherical graphite to petroleum pitch | Thermal treatment temperature (°C) | I_{D}/I_{G} of second carbon-based material |
|---|---|---|---|
| 2-1 | 100:10 | 1130 | 0.42 |
| 2-2 | 100:8 | 1200 | 0.38 |
| 2-3 | 100:10 | 1020 | 0.50 |
| 2-4 | 100:12 | 940 | 0.60 |

### Preparation of materials 2-5 to 2-7:

The preparation method of materials 2-5 to 2-7 was similar to that of material 2-1, except that: the volume distribution particle size Dv50 of natural spherical graphite was adjusted within the range of 7.0 µm to 16 µm, such that the volume distribution particle size Dv50 of materials 1-5 to 1-7 fell within the range of 7.8 µm to 17 µm. Details are as follows:

**Table 4.**

| Material Number | Volume distribution particle size of natural spherical graphite Dv50 | Volume distribution particle size of second carbon-based material Dv50 (µm) |
|---|---|---|
| 2-5 | 7.0 | 7.8 |
| 2-6 | 11.2 | 12.0 |
| 2-7 | 16.0 | 17.0 |

### Example 1

### Preparation of secondary battery:

1. Negative electrode plate: A negative electrode active material (acquired by mixing material 1-1 (as the first carbon-based material) and material 2-1 (as the second carbon-based material) in a mass ratio of 70:30), a conductive agent carbon black (Super P), a thickener sodium carboxymethylcellulose, and a binder styrene-butadiene rubber were thoroughly stirred and mixed in an appropriate amount of deionized water solvent according to a weight ratio of 96.4:1:1.2:1.4 to form a negative electrode slurry. The negative electrode slurry was applied on two surfaces of a negative electrode current collector copper foil, and the copper foil was then subjected to drying and cold pressing to give the negative electrode plate.
2. Positive electrode plate: LiNi_{0.5}Co_{0.2}Mn_{0.3}O₂ (NCM523), a conductive agent carbon black (Super P), and a binder polyvinylidene fluoride were mixed in a mass ratio of 96:2:2, before a proper amount of solvent N-methylpyrrolidone (NMP) was added. The mixture was stirred thoroughly to give a positive electrode slurry. The positive electrode slurry was applied on two surfaces of a positive electrode current collector aluminum foil, and the aluminum foil was then subjected to drying and cold pressing to give the positive electrode plate.
3. Electrolytic solution: Ethylene carbonate (EC), ethyl methyl carbonate (EMC), and diethyl carbonate (DEC) were mixed in a volume ratio of 1:1:1 to give an organic solvent. Then, LiPF₆ was dissolved in the above organic solvent to prepare an electrolytic solution with a concentration of 1 mol/L.
4. Separator: A polypropylene film was used.
5. Preparation of secondary battery: The positive electrode plate and the negative electrode plate prepared above were stacked in sequence to dispose the separator between the positive electrode plate and the negative electrode plate for isolation, and then the stack was wound to give an electrode assembly. The electrode assembly was placed in an outer packaging and dried, and then the electrolytic solution was injected. After undergoing processes such as vacuum packaging, standing, formation, and shaping, a secondary battery was obtained.

### Examples 2-7

The battery preparation methods of Examples 2-7 were similar to that of Example 1, except that: different materials are selected for the first carbon-based material or the second carbon-based material, as detailed in Table 5.

### Comparative Example 1

A secondary battery was assembled in a manner similar to the preparation method of Example 1, except that: only the first carbon-based material (material 1-1 above) used in Example 1 was included in the negative electrode active material.

### Comparative Example 2

A secondary battery was assembled in a manner similar to the preparation method of Example 1, except that: only the second carbon-based material (material 2-1 above) used in Example 1 was included in the negative electrode active material.

### Performance Test

### 1. Material testing

The S2/S1 of the first carbon-based material was measured by the following method.

The binder for sample preparation was mixed uniformly with the first carbon-based material powder and then coated on a copper foil, and the copper foil was dried at 60 °C for 30 min for later use. Five samples to be measured with a size of 6 mm × 6 mm were cut from five different positions and respectively pasted on a sample stage of a CP-type argon ion cross-section polisher. The samples were cut using a plasma beam to obtain the cross-sections of each sample. The test instrument was an IB-09010 CP argon ion cross-section polisher supplied by JEOL Ltd.

A scanning electron microscope was used to scan the cross-sections of the sample of the first carbon-based material, and scanning images were acquired from randomly selected regions of the sample cross-sections. For the test, reference may be made to JY/T010-1996. The test instrument was the Sigma 300 SEM from ZEISS, Germany.

Cross-sections of 20 particles of the first carbon-based material were randomly selected from the scanning images. The region extending from the surface of the particle of the first carbon-based material to the interior of the particle by a distance of 0.25 µm was denoted as the external region, and the region inside the external region was denoted as the internal region. The total pore area S1' of the external region of each particle cross-section and the pore area S2' of the internal region of the first carbon-based material were acquired using image processing software, and the value of S2'/S1' was calculated. The arithmetic mean value of S2'/S1' for all 20 particles was calculated as the S2/S1 value of the first carbon-based material. The image processing software was AVIZO.

### 2. Electrode plate test

The negative electrode plate was cut into samples to be tested of 2 cm × 2 cm, and fixed on a sample stage with paraffin. The sample stage was placed into a sample holder and locked in place, an argon ion cross-section polisher (the IB-09010 CP argon ion cross-section polisher from JEOL Ltd., Japan) was turned on and evacuated to 10⁻⁴ Pa. After setting the argon flow to 0.15 MPa, the voltage to 8 kV, and the polishing time to 2 h, the sample stage was adjusted to an oscillation mode to begin polishing. A region of the sample to be tested was randomly selected for scanning (e.g., with reference to JY/T010-1996 under a SEM (Sigma 300 from ZEISS)), and the ion-polished cross-section profile (CP) image of the negative electrode plate was obtained at 500-fold magnification as shown in FIG. 1. Clearly different pore structure distributions in the first carbon-based material and the second carbon-based material can be seen from the arrows in FIG. 1. The first carbon-based material exhibited a number of pores near the center of the particle, but few pores near the surface of the particle. In contrast, various regions of the second carbon-based material showed significantly larger and more pores. Mixing the two is beneficial to give play to the advantages of the respective structures.

### 3. Battery performance test

### (1) Low-temperature rapid charge performance test of secondary battery

At 0 °C, the secondary batteries were charged at a constant current of 0.33 C to 4.3 V, and then charged at a constant voltage until the current was 0.05 C. After being left to stand for 5 min, the secondary batteries were discharged at a constant current of 0.33 C to 2.8 V, and the actual capacity was recorded as C0.

Subsequently, the secondary batteries were charged sequentially at constant currents of 1.0 C0, 1.3 C0, 1.5 C0, 1.8 C0, 2.0 C0, 2.3 C0, 2.5 C0, and 3.0 C0 until reaching either 4.3 V or the 0V negative electrode cut-off potential, whichever occurred first. After each charge cycle, the batteries were discharged at 1 C0 to 2.8 V, and the negative electrode potential corresponding to 10%, 20%, 30%, ..., to 80% state of charge (SOC) was recorded for different charging rates. A charging rate-negative electrode potential curve was plotted for different SOC states, and linear fitting was performed to determine the charging rate corresponding to a negative electrode potential of 0 V at different SOC states. The charging rates were defined as the charge windows at the given SOC state and were recorded as C10%SOC, C20%SOC, C30%SOC, C40%SOC, C50%SOC, C60%SOC, C70%SOC, and C80%SOC. The charging time T (where lithium in the secondary battery did not deintercalate; in minutes) required for the charging battery from 10% SOC to 80% SOC was calculated according to the formula: (60/C20%SOC + 60/C30%SOC + 60/C40%SOC + 60/C50%SOC + 60/C60%SOC + 60/C70%SOC + 60/C80%SOC) × 10%. A shorter charging duration indicates better kinetics performance of the secondary battery.

### (2) Storage performance test of secondary battery at 60 °C

At 25 °C, the secondary batteries prepared above were charged at a constant current of 1 C to 4.3 V, and then charged at a constant voltage until the current was 0.05 C. After being left to stand for 5 min, the secondary batteries were discharged at a constant current of 1 C to 2.8 V. The discharging capacity at this point was recorded as the discharging capacity before storage.

At 25 °C, the secondary batteries prepared above were charged at a constant current of 1 C to 4.3 V, and then charged at a constant voltage until the current was 0.05 C. Then, the secondary battery was stored in an incubator at 60 °C for 150 days. Capacity retention rate (%) of the secondary battery stored at 60 °C for 150 days = discharging capacity after storage/discharging capacity before storage × 100%.

The test results of the secondary batteries prepared in Examples 1 to 7 and Comparative Examples 1 and 2 are shown in Table 5 below.

**Table 5.**

| Serial number | First carbon-based material | | Second carbon-based material | | Secondary battery performance | |
|---|---|---|---|---|---|---|
| | Material Number | I_{D}/I_{G} | Material Number | I_{D}/I_{G} | Charge time at 0 °C (min) | Capacity retention rate at 60 °C/150 days |
| Example 1 | 1-1 | 0.18 | 2-1 | 0.42 | 59.4 | 88.1% |
| Example 2 | 1-2 | 0.13 | 2-1 | 0.42 | 60.3 | 88.5% |
| Example 3 | 1-3 | 0.27 | 2-1 | 0.42 | 58.5 | 87.5% |
| Example 4 | 1-4 | 0.33 | 2-1 | 0.42 | 57.8 | 86.6% |
| Example 5 | 1-1 | 0.18 | 2-2 | 0.38 | 60.5 | 88.7% |
| Example 6 | 1-1 | 0.18 | 2-3 | 0.50 | 57.2 | 86.8% |
| Example 7 | 1-1 | 0.18 | 2-4 | 0.60 | 52.6 | 84.5% |
| Comparative Example 1 | 1-1 | 0.18 | / | / | 90.2 | 88.8% |
| Comparative Example 2 | / | / | 2-1 | 0.42 | 53.1 | 77.1% |

As can be seen from Table 5 above, the negative electrode active materials in Comparative Example 1 were all the first carbon-based material used in Example 1. Although good high-temperature storage performance was achieved, the low-temperature charging time was excessive. In Comparative Example 2, the negative electrode active materials were all the second carbon-based material used in Example 1. Although a short low-temperature charging time was achieved, the high-temperature storage performance was poor. In contrast, when the first carbon-based material and the second carbon-based material were mixed in Example 1, the battery exhibited both good low-temperature kinetics performance and high-temperature storage performance.

Further, by adjusting the I_{D}/I_{G} value of the first carbon-based material, as the I_{D}/I_{G} value of the first carbon-based material gradually increases, the low-temperature charging time is gradually reduced, but the high-temperature storage performance is affected. This is mainly attributed to the increase of defects on the surface of the material, side reactions, and lithium consumption when I_{D}/I_{G} increases, which may affect the high-temperature storage performance to some extent.

Similarly, the change in the I_{D}/I_{G} of the second carbon-based will also cause a corresponding change in the charging capacity and the high-temperature storage performance. As the I_{D}/I_{G} value of the second carbon-based material increases, the low-temperature charging time is shortened. However, when the value is excessive, for example, as shown in Example 7, when the value of I_{D}/I_{G} is 0.60, the high-temperature storage performance is slightly reduced.

It indicates that selecting two materials with an appropriate I_{D}/I_{G} is beneficial to keeping a balance between improved low-temperature kinetics performance and improved high-temperature storage performance.

### Examples 8 to 10

The second carbon-based material used in Example 1 was used, except that: first carbon-based materials with different particle sizes were selected for the assembly of secondary batteries.

### Examples 11 to 13

The first carbon-based material used in Example 1 was used, except that: second carbon-based materials with different particle sizes were selected for the assembly of secondary batteries.

The parameters and test results of the secondary batteries prepared in Examples 1 and 8 to 13 are shown in Table 6 below.

**Table 6.**

| Serial number | First carbon-based material | | | Second carbon-based material | | | Secondary battery performance | |
|---|---|---|---|---|---|---|---|---|
| | Material Number | I_{D}/I_{G} | Dv50 (µm) | Material Number | I_{D}/I_{G} | Dv50 (µm) | Charge time at 0 °C (min) | Capacity retention rate at 60 °C/150 days |
| Example 1 | 1-1 | 0.18 | 17.5 | 2-1 | 0.42 | 11.2 | 59.4 | 88.1% |
| Example 8 | 1-5 | 0.18 | 16.3 | 2-1 | 0.42 | 11.2 | 59.0 | 87.9% |
| Example 9 | 1-6 | 0.18 | 19.8 | 2-1 | 0.42 | 11.2 | 59.9 | 88.8% |
| Example 10 | 1-7 | 0.18 | 22.0 | 2-1 | 0.42 | 11.2 | 63.2 | 89.2% |
| Example 11 | 1-1 | 0.18 | 17.5 | 2-5 | 0.42 | 7.8 | 48.7 | 85.4% |
| Example 12 | 1-1 | 0.18 | 17.5 | 2-6 | 0.42 | 12.0 | 62.9 | 88.5% |
| Example 13 | 1-1 | 0.18 | 17.5 | 2-7 | 0.42 | 17.0 | 78.2 | 88.8% |

As can be seen from Examples 1 and 8 to 10 in the above table, when the volume distribution particle size Dv50 of the first carbon-based material gradually decreases, the low-temperature charging time is shortened, which is beneficial to the low-temperature kinetics performance, but the high-temperature capacity retention rate is slightly reduced. According to Examples 1 and 11 to 13, it can be seen that when the volume distribution particle size Dv50 of the second carbon-based material gradually decreases, the low-temperature kinetics is significantly improved, but the high-temperature storage performance is reduced. In addition, in Example 13, when the Dv50 of the first carbon-based material is close to or even greater than the Dv50 of the second carbon-based material, the high-temperature storage performance is good, while the low-temperature kinetics performance is significantly reduced.

### Examples 14 and 15

The first carbon-based material and the second carbon-based material used in Example 1 were used for the assembly of secondary batteries, except that the first carbon-based material and the second carbon-based material had different mass proportions, as shown in Table 7.

The test results of the secondary batteries prepared in Examples 1, 14, and 15 are shown in Table 7 below.

**Table 7.**

| Serial number | First carbon-based material Mass ratio | Second carbon-based material Mass ratio | Secondary battery performance | |
|---|---|---|---|---|
| | | | Charge time at 0 °C (min) | Capacity retention rate at 60 °C/150 days |
| Example 1 | 70% | 30% | 59.4 | 88.1% |
| Example 13 | 50% | 50% | 54.3 | 87.6% |
| Example 14 | 40% | 60% | 52.2 | 83.3% |

As can be seen from Table 7 above, when the mass proportion of the first carbon-based material is greater than 50%, especially 70%, and the mass proportion of the second carbon-based material is less than 50%, especially 30%, a better balance can be kept between the low-temperature kinetics performance and the capacity retention rate of the secondary battery at 60 °C/180 days.

It should be noted that the present disclosure is not limited to the embodiments described above. The embodiments described above are merely examples, and any embodiments having a structure substantially identical to the technical concept and exerting the same functional effects within the scope of the technical solutions of the present disclosure are all included within the technical scope of the present disclosure. Furthermore, without departing from the spirit of the present disclosure, various modifications that can be conceived by those skilled in the art to the embodiments, as well as other embodiments formed by combining some of the constituent elements of the embodiments, are also included within the scope of the present disclosure.

### Industrial Applicability

The present disclosure provides a secondary battery and an electric device. The secondary battery includes a negative electrode plate, where the negative electrode plate includes a negative electrode current collector and a negative electrode film layer on at least one surface of the negative electrode current collector; the negative electrode film layer includes a negative electrode active material; the negative electrode active material includes a first carbon-based material and a second carbon-based material, and both the first carbon-based material and the second carbon-based material are provided with pore structures; the I_{D}/I_{G} of the first carbon-based material is ≤ 0.27, and the I_{D}/I_{G} of the second carbon-based material is ≥ 0.38, where the I_{D} denotes the D peak intensity at 1350 ± 50 cm⁻¹ in a Raman spectrum, and the I_{G} denotes the G peak intensity at 1580 + 50 cm⁻¹ in a Raman spectrum. The secondary battery has improved low-temperature kinetics performance and high-temperature storage performance.

## Claims

1. A secondary battery, comprising a negative electrode plate, wherein the negative electrode plate comprises a negative electrode current collector and a negative electrode film layer on at least one surface of the negative electrode current collector; the negative electrode film layer comprises a negative electrode active material; the negative electrode active material comprises a first carbon-based material and a second carbon-based material, and both the first carbon-based material and the second carbon-based material are provided with pore structures; the I_{D}/I_{G} of the first carbon-based material is ≤ 0.27, and the I_{D}/I_{G} of the second carbon-based material is ≥ 0.38, wherein the I_{D} denotes the D peak intensity at 1350 ± 50 cm⁻¹ in a Raman spectrum, and the I_{G} denotes the G peak intensity at 1580 + 50 cm⁻¹ in a Raman spectrum.

2. The secondary battery according to claim 1, wherein
the I_{D}/I_{G} of the first carbon-based material is 0.13 to 0.25; and/or,
the I_{D}/I_{G} of the second carbon-based material is 0.40 to 0.60.

3. The secondary battery according to claim 1 or 2, wherein the I_{3R(101)}/I_{2H(004)} in the XRD diffraction pattern of the first carbon-based material is less than the I_{3R(101)}/I_{2H(004)} in the XRD diffraction pattern of the second carbon-based;
optionally, the I_{3R(101)}/I_{2H(004)} in the XRD diffraction pattern of the first carbon-based material is less than or equal to 0.06, more optionally 0 to 0.06;
optionally, the I_{3R(101)}/I_{2H(004)} of the second carbon-based material is ≥ 0.2, more optionally 0.22 to 0.4;
wherein the I_{3R} is the diffraction peak intensity of the 101 crystal plane of the 3R phase of a carbon-based material corresponding to 43° to 44° in an XRD diffraction pattern, and the I_{2H} is the diffraction peak intensity of the 004 crystal plane of the 2H phase of a carbon-based material corresponding to 53° to 55° in an XRD diffraction pattern.

4. The secondary battery according to any one of claims 1 to 3, wherein the volume distribution particle size Dv50 of the first carbon-based material is greater than the volume distribution particle size Dv50 of the second carbon-based material.

5. The secondary battery according to any one of claims 1 to 4, wherein
the volume distribution particle size Dv50 of the first carbon-based material is ≥ 15 µm, optionally 16 µm ≤ Dv50 ≤ 20 µm; and/or
the volume distribution particle size Dv50 of the second carbon-based material is ≤ 13 µm, optionally 7 µm ≤ Dv50 ≤ 12 µm.

6. The secondary battery according to any one of claims 1 to 5, wherein the BET specific surface area of the first carbon-based material is less than the BET specific surface area of the second carbon-based material.

7. The secondary battery according to claim 6, wherein
the specific surface area of the first carbon-based material is less than or equal to 2.1 m²/g, optionally 1.3 m²/g to 1.9 m²/g; and/or
the specific surface area of the second carbon-based material is less than or equal to 3.6 m²/g, optionally 1.8 m²/g to 3.4 m²/g.

8. The secondary battery according to any one of claims 1 to 7, wherein the degree of graphitization of the first carbon-based material is greater than the degree of graphitization of the second carbon-based material.

9. The secondary battery according to any one of claims 1 to 8, wherein
the degree of graphitization of the first carbon-based material is ≥ 95%, optionally 96.0% to 98.5%; and/or
the degree of graphitization of the second carbon-based material is ≥ 95%, optionally 95.0% to 97.5%.

10. The secondary battery according to any one of claims 1 to 9, wherein the first carbon-based material comprises an external region and an internal region located inside the external region, wherein the external region refers to a region extending from the surface of a particle of the first carbon-based material to the interior of the particle by a distance of 2.5 µm; in a cross-sectional view of the first carbon-based material, with the total pore area of the external region being denoted as S1 and the total pore area of the internal region being denoted as S2, S2 > S1, optionally, 2.5 ≤ S2/S1 ≤ 460.

11. The secondary battery according to any one of claims 1 to 10, wherein the area of a single pore structure in
the external region of the first carbon-based material is less than or equal to 0.15 µm², optionally less than or equal to 0.13 µm²; and/or
the internal region of the first carbon-based material comprises one or more pore structures having an area of greater than or equal to 0.15 µm², and optionally comprises one or more pore structures having an area of 0.15 µm² to 2.0 µm².

12. The secondary battery according to any one of claims 1 to 11, wherein at least part of the surface of the second carbon-based material is provided with a coating layer; optionally, the coating layer is a carbon coating layer.

13. The secondary battery according to any one of claims 1 to 12, wherein the first carbon-based material satisfies at least one of the following:
(1) the compaction density of the first carbon-based material at 50,000 N being ≤ 2.10 g/cm³, optionally 1.85 g/cm³ to 2.00 g/cm³;
(2) the volume distribution particle size Dv90 of the first carbon-based material being less than or equal to 40 µm, optionally 30 µm to 38 µm;
(3) the particle size distribution [(Dv90)-(Dv10)]/(Dv50)] of the first carbon-based material being ≤ 1.55, optionally 0.90 to 1.50;
(4) the specific capacity of the first carbon-based material being ≥ 362 mAh/g, optionally 365 mAh/g to 372 mAh/g; and
(5) the first carbon-based material comprising a primary particle, and optionally, the number proportion of the primary particle in the first carbon-based material being greater than or equal to 80%.

14. The secondary battery according to any one of claims 1 to 13, wherein the second carbon-based material satisfies at least one of the following:
(1) the specific capacity of the second carbon-based material being ≥ 358 mAh/g, optionally 360 mAh/g to 367 mAh/g;
(2) the compaction density of the second carbon-based material at 50,000 N being ≤ 1.95 g/cm³, optionally 1.75 g/cm³ to 1.90 g/cm³;
(3) the second carbon-based material comprising a primary particle, and optionally, the number proportion of the primary particle in the second carbon-based material being greater than or equal to 80%; and
(4) the second carbon-based material being natural graphite.

15. The secondary battery according to any one of claims 1 to 14, wherein the mass proportion of the first carbon-based material in the negative electrode active material is greater than that of the second carbon-based material in the negative electrode active material;
optionally, the mass proportion of the first carbon-based material in the negative electrode active material is ≥ 55wt%, optionally 60wt% to 80wt%.

16. The secondary battery according to any one of claims 1 to 15, wherein the negative electrode active material satisfies at least one of the following:
(1) the volume distribution particle size Dv50 of the negative electrode active material being ≤ 17.0 µm, optionally 12 µm to 16.5 µm;
(2) the volume distribution particle size Dv90 of the negative electrode active material being ≤ 35 µm, optionally 25 µm to 33 µm;
(3) the volume particle size distribution of the negative electrode active material satisfying: (Dv90-Dv10)/Dv50 ≤ 1.50, optionally 1.0 to 1.45; and
(4) the specific surface area of the negative electrode active material being ≤ 3.0 m²/g, optionally 1.5 m²/g to 2.8 m²/g.

17. The secondary battery according to any one of claims 1 to 16, wherein the negative electrode film layer satisfies at least one of the following:
(1) the compaction density of the negative electrode film layer being ≥ 1.5 g/cm ³, optionally 1.6 g/cm³ to 1.7 g/cm³;
(2) the areal density of the negative electrode film layer being ≥ 10 mg/cm², optionally 11.0 mg/cm² to 15.0 mg/cm²;
(3) the porosity of the negative electrode film layer being 16% to 30%, optionally 19.0% to 27%; and
(4) the thickness of the negative electrode film layer being ≥ 70 µm, optionally 90 µm to 130 µm.

18. An electric device, comprising the secondary battery according to any one of claims 1 to 17.
